(19)

Europäisches
Patentamt
European
Patent Office
Office européen
des brevets

(11) **EP 3 604 597 B1**

(12) **EUROPEAN PATENT SPECIFICATION**

(45) Date of publication and mention
of the grant of the patent:
**19.10.2022 Bulletin 2022/42**

(21) Application number: **18776131.7**

(22) Date of filing: **27.03.2018**

(51) International Patent Classification (IPC):
*C22C 38/00* (2006.01)    *B23K 20/04* (2006.01)
*C21D 8/02* (2006.01)    *C22C 19/05* (2006.01)
*C22C 38/14* (2006.01)    *C22C 38/58* (2006.01)
*C22F 1/10* (2006.01)    *C22F 1/00* (2006.01)
*C22C 38/02* (2006.01)    *C22C 38/04* (2006.01)
*C22C 38/06* (2006.01)    *C22C 38/12* (2006.01)
*C22C 38/42* (2006.01)    *C22C 38/44* (2006.01)
*C22C 38/46* (2006.01)    *C22C 38/48* (2006.01)
*C22C 38/50* (2006.01)    *B32B 15/01* (2006.01)
*C21D 6/00* (2006.01)    *C21D 9/46* (2006.01)

(52) Cooperative Patent Classification (CPC):
**B23K 20/04; B32B 15/011; B32B 15/015;
C21D 6/005; C21D 6/008; C21D 8/02;
C21D 8/0226; C21D 9/46; C22C 19/055;
C22C 38/002; C22C 38/02; C22C 38/04;
C22C 38/06; C22C 38/12; C22C 38/14;**    (Cont.)

(86) International application number:
**PCT/JP2018/012547**

(87) International publication number:
**WO 2018/181381 (04.10.2018 Gazette 2018/40)**

(54) **CLAD STEEL SHEET AND METHOD FOR PRODUCING SAME**

PLATTIERTES STAHLBLECH UND VERFAHREN ZUR HERSTELLUNG DAVON

TÔLE D'ACIER PLAQUÉE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2017 JP 2017065854**
            **31.08.2017 JP 2017166569**

(43) Date of publication of application:
**05.02.2020 Bulletin 2020/06**

(73) Proprietor: **JFE Steel Corporation
Tokyo 100-0011 (JP)**

(72) Inventors:
• **SAKAI Ryosuke
Tokyo 100-0011 (JP)**
• **TACHIBANA Shunichi
Tokyo 100-0011 (JP)**

• **KURONUMA Yota
Tokyo 100-0011 (JP)**
• **YOKOTA Tomoyuki
Tokyo 100-0011 (JP)**
• **HASE Kazukuni
Tokyo 100-0011 (JP)**
• **IGI Satoshi
Tokyo 100-0011 (JP)**

(74) Representative: **Hoffmann Eitle
Patent- und Rechtsanwälte PartmbB
Arabellastraße 30
81925 München (DE)**

(56) References cited:
**WO-A1-2016/075925    WO-A1-2016/075925
JP-A- 2015 086 422    JP-A- 2015 105 399
JP-A- 2015 105 399    JP-A- 2015 117 408
JP-A- 2015 224 376    JP-A- 2016 108 665**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**C22C 38/42; C22C 38/44; C22C 38/46;**
**C22C 38/48; C22C 38/50; C22C 38/58;**
C21D 2211/001; C21D 2211/002; C21D 2211/008;
C22F 1/10

## Description

TECHNICAL FIELD

This disclosure relates to a clad steel plate and a method of producing the same, and particularly to a clad steel plate suitable for a line pipe and a method of producing the same.

BACKGROUND

A clad steel plate is a steel plate obtained by bonding or joining a cladding metal made of a corrosion-resistant alloy to a base steel plate of carbon steel or the like. Such a clad steel plate can provide corrosion resistance equivalent to that of a solid metal while suppressing the use of expensive alloying elements, and therefore has an advantage of high economic efficiency.

In recent years, oil and natural gas development has expanded to areas exposed to severe corrosive environments. Consequently, it is expected that the demand for line pipes that can economically transport oil and natural gas will increase. It is also expected that clad steel plates, especially Ni-based alloy clad steel plates and austenitic stainless clad steel plates, are going to be used in the line pipes exposed to severe corrosive environments because of their high corrosion resistance.

The clad steel plates used for line pipes are required to have corrosion resistance in the cladding metal and specified mechanical properties, particularly excellent low-temperature toughness in view of prevention of pipeline brittle fracture.

Examples of such a clad steel plate include the one described in JP 2015-086422 A (PTL 1), which is "a Ni-alloy clad steel plate comprising a Ni alloy as a cladding metal and a low alloy steel as a base steel, where the base steel has a chemical composition containing, in mass%, C: 0.020 % to 0.100 %, Si: 0.10 % to 0.50 %, Mn: 0.75 % to 1.80 %, P: 0.015 % or less, S: 0.0030 % or less, Cu : 0.01 % to 0.50 %, Ni: 0.01 % to 0.45 %, Cr: 0.01 % to 0.50 %, Mo: 0.01 % to 0.50 %, Nb: 0.005 % to 0.080 %, Ti: 0.005 % to 0.030 %, N: 0.0010 % to 0.0060 %, A1: 0.070 % or less, and Ca: 0.0010 % to 0.0040 %, with the balance being Fe and inevitable impurities; and the Ni-alloy clad steel plate is excellent in terms of the low-temperature toughness and the HAZ toughness of the base steel and the corrosion resistance of the cladding metal".

In addition, JP 2015-117408 A (PTL 2) describes "a Ni-alloy clad steel plate comprising a Ni alloy as a cladding metal and a low alloy steel as a base steel, where the base steel has a chemical composition containing, in mass%, C: 0.020 % to 0.100 %, Si: 0.10 % to 0.50 %, Mn: 0.75 % to 1.80 %, P: 0.015 % or less, S: 0.0030 % or less, Cu : 0.01 % to 0.50 %, Ni: 0.01 % to 0.45 %, Cr: 0.01 % to 0.50 %, Mo: 0.01 % to 0.50 %, Nb: 0.005 % to 0.080 %, Ti: 0.005 % to 0.030 %, N: 0.0010 % to 0.0060 %, A1: 0.070 % or less, and Ca: 0.0010 % to 0.0040 %, with the balance being Fe and inevitable impurities; and the Ni-alloy clad steel plate is excellent in terms of the low-temperature toughness and the HAZ toughness of the base steel and the corrosion resistance of the cladding metal".

Furthermore, JP 2015-105399 A (PTL 3) describes "an austenitic stainless clad steel plate comprising an austenitic stainless steel as a cladding metal and a low alloy steel as a base steel, where the base steel contains, in mass%, C: 0.020 % to 0.100 %, Si: 0.10 % to 0.50 %, Mn: 0.75 % to 1.80 %, P: 0.015 % or less, S: 0.0030 % or less, Cu : 0.01 % to 0.50 %, Ni: 0.01 % to 0.45 %, Cr: 0.01 % to 0.50 %, Mo: 0.01 % to 0.50 %, Nb: 0.005 % to 0.080 %, Ti: 0.005 % to 0.030 %, N: 0.0010 % to 0.0060 %, A1: 0.070 % or less, and Ca: 0.0010 % to 0.0040 %, with the balance being Fe and inevitable impurities; and the austenitic stainless clad steel plate is excellent in terms of the low-temperature toughness and the HAZ toughness of the base steel and the corrosion resistance of the cladding metal".

WO 2016/075925 A1 (PTL 4) relates to a nickel-base alloy-clad steel plate that is a clad steel plate including a cladding metal composed of a nickel-base alloy such as Alloy 825 or Alloy 625, the clad steel plate including a base metal containing a large amount of Nb and having a DWTT property, i.e. the capability of stopping the propagation of brittle fracture, of 85% or more in terms of shear fracture percentage at a test temperature of -25°C.

CITATION LIST

Patent Literature

PTL 1: JP 2015-086422 A
PTL 2: JP 2015-117408 A

PTL 3: JP 2015-105399 A
PTL 4: WO 2016/075925 A1

SUMMARY

(Technical Problem)

The techniques of PTLs 1 to 3 apply thermo-mechanical control process (TMCP) to realize the mechanical properties of cladding metal corrosion resistance, a plate thickness of 30 mm or less, a tensile strength of 535 MPa or more, and a $DWTTSA_{-20\,°C}$ of 85 % or more, without impairing the productivity.

The $DWTTSA_{-20\,°C}$ is a percent ductile fracture obtained by a DWTT test (test temperature: -20 °C) in accordance with API-5L.

However, since clad steel plates are work hardened during pipe production, further improvement in low-temperature toughness has been required in consideration of the deterioration in toughness due to the work hardening.

It could thus be helpful to provide a clad steel plate having further improved low-temperature toughness while securing a tensile strength of 535 MPa or more, as well as an advantageous method of producing the same.

Note that the words "excellent in terms of low-temperature toughness" means that the percent ductile fracture: $DWTTSA_{-30\,°C}$ obtained by a DWTT test (test temperature: -30 °C) in accordance with API-5L is 85 % or more. The test temperature in the DWTT test is set to -30 °C in anticipation of the deterioration in toughness due to the work hardening during pipe production.

(Solution to Problem)

We have made intensive study to develop a clad steel plate having further improved low-temperature toughness while securing specified mechanical properties, and found the following.

(A) In order to obtain excellent low-temperature toughness, it is effective to refine the microstructure which increases the brittle crack propagation resistance of the base steel plate, and at the same time, to reduce the hard phase which may be the origin of brittle cracks.

Specifically, it is effective to have a bainite-based microstructure as the steel microstructure of the base steel plate, specifically, have an area ratio of bainite of 94 % or more and an average grain diameter of bainite of 25 $\mu$m or less at a 1/2 plate thickness position in the thickness direction of the base steel plate, and an area ratio of martensite austenite constituent of 6 % or less at the 1/2 plate thickness position in the thickness direction of the base steel plate.

(B) In order to control the microstructure as described above, it is important to properly control the chemical composition and the production conditions, especially the quenching and tempering conditions after rolling.

The present disclosure is based on these discoveries and further studies.

Specifically, the primary features of the present disclosure are summarized in the appended claims.

(Advantageous Effect)

According to the present disclosure, it is possible to obtain a clad steel plate having a $DWTTSA_{-30\,°C}$ of 85 % or more while securing a tensile strength of 535 MPa or more.

In addition, the clad steel plate is extremely useful in industrial terms because it can be used in line pipes for oil and natural gas transportation which are exposed to severe corrosive environments.

DETAILED DESCRIPTION

The following describes the present disclosure in detail.

The present disclosure is directed to a clad steel plate including: a base steel plate; and a cladding metal made of a corrosion-resistant alloy bonded or joined to one surface of the base steel plate. The thickness of the clad steel plate is not particularly limited, yet is about 30 mm or less. In addition, the thicknesses of the base steel plate and the cladding metal are usually about 5 mm to 27 mm and 1.5 mm to 4.0 mm, respectively.

First, the chemical composition of the base steel plate of the disclosed clad steel plate will be described. The % representations below indicating the chemical composition are in mass% unless stated otherwise.

1. Chemical composition of base steel plate

C: 0.020 % to 0.100 %

C contributes to precipitation strengthening as carbide. When the C content is less than 0.020 %, sufficient strength cannot be secured. On the other hand, when the C content exceeds 0.100 %, the low-temperature toughness of the base steel plate and the toughness of the heat-affected zone are deteriorated. Therefore, the C content is 0.020 % to 0.100 %. The C content is preferably 0.020 % to 0.080 %.

Si: 0.05 % to 0.50 %

Si is an element added for securing the strength of the steel material by deoxidation and solid solution strengthening. When the Si content is less than 0.05 %, the effect is insufficient. On the other hand, when the Si content exceeds 0.50 %, the toughness and the weldability are deteriorated. Therefore, the Si content is 0.05 % to 0.50 %. The Si content is preferably 0.10 % or more, and more preferably 0.20 % or more. In addition, the Si content is preferably 0.40 % or less.

Mn: 0.75 % to 1.80 %

Mn is an element added for securing strength and toughness. When the Mn content is less than 0.75 %, the effect is insufficient. On the other hand, when the Mn content exceeds 1.80 %, the weldability is deteriorated. Therefore, the Mn content is 0.75 % to 1.80 %. The Mn content is preferably 1.00 % or more. In addition, the Mn content is preferably 1.70 % or less.

P: 0.015 % or less

P is an inevitable impurity that deteriorates weldability. Therefore, the P content is 0.015 % or less. The P content is preferably 0.010 % or less. The lower limit of the P content is not particularly limited, and may be 0 %.

S: 0.0030 % or less

S generally exists in steel as sulfide inclusions and deteriorates ductility and toughness. Therefore, it is preferable to reduce S as much as possible, and the S content is set to 0.0030 % or less. The S content is preferably 0.0010 % or less. The lower limit of the S content is not particularly limited, and may be 0 %.

A1: 0.010 % to 0.070 %

A1 is added for deoxidation. However, when the A1 content is less than 0.010 %, the effect is insufficient. On the other hand, when the A1 content exceeds 0.070 %, alumina clusters are formed to deteriorate the ductility. Therefore, the A1 content is 0.010 % to 0.070 %. The A1 content is preferably 0.010 % to 0.040 %.

Nb: 0.005 % to 0.080 %

Nb effectively improves the strength of the steel plate by precipitation strengthening and quench hardenability increasing. In addition, it has the effect of expanding the $\gamma$ non-recrystallization temperature range, and contributes to the improvement of toughness by microstructure refinement. However, when the Nb content is less than 0.005 %, the effect is insufficient. On the other hand, when the Nb content exceeds 0.080 %, the toughness of the heat-affected zone is deteriorated. Therefore, the Nb content is 0.005 % to 0.080 %. The Nb content is preferably 0.010 % or more. In addition, the Nb content is preferably 0.050 % or less.

Ti: 0.005 % to 0.030 %

When the Ti content is 0.005 % or more, coarsening of austenite is suppressed by the pinning effect produced by nitride formation, which contributes to securing the toughness of the base steel and the heat-affected zone. In addition, Ti effectively improves the strength of the steel plate by precipitation strengthening. However, when the Ti content exceeds 0.030 %, the nitrides are coarsened and become the origin of brittle fracture and ductile fracture. Therefore, the Ti content is 0.005 % to 0.030 %. The Ti content is preferably 0.010 % or more. In addition, the Ti content is preferably 0.020 % or less.

N: 0.0010 % to 0.0060 %

When the N content is 0.0010 % or more, coarsening of austenite is suppressed by the pinning effect produced by nitride formation, which contributes to securing the toughness of the base steel and the heat-affected zone. However, when the N content exceeds 0.0060 %, the toughness of the heat-affected zone is deteriorated. Therefore, the N content is 0.0010 % to 0.0060 %. The N content is preferably 0.0020 % or more. In addition, the N content is preferably 0.0050 % or less.

In order to fully exhibit the pinning effect produced by nitride formation, the ratio of Ti content to N content is also important. Specifically, when the Ti content/N content is less than 2.0 or the Ti content/N content is more than 3.5 in mass%, the pinning effect produced by nitride formation may not be sufficiently exhibited, leading to coarsening of austenite and deterioration in toughness. Therefore, the Ti content/N content is preferably 2.0 to 3.5.

In addition to the above-described basic components, it is possible to further optionally contain at least one selected from Cu: 0.50 % or less, Cr: 0.50 % or less, Mo: 0.50 % or less, V: 0. 100 % or less, Ni: 0.50 % or less, or Ca: 0.0040 % or less.

Cu: 0.50 % or less, Cr: 0.50 % or less, and Mo: 0.50 % or less

Cu, Cr, and Mo are all quench hardenability-improving elements, and they contribute to the strengthening of the base steel and the heat-affected zone. In order to obtain this effect, it is preferable to contain Cu, Cr and Mo at 0.01 % or more respectively. On the other hand, if the Cu, Cr and Mo content each exceed 0.50 %, the toughness of the heat-affected zone may be deteriorated. Therefore, in the case of containing Cu, Cr and Mo, the content is set to 0.50 % or less. The content is more preferably 0.05 % or more. The content is more preferably 0.40 % or less.

V: 0.100 % or less

V contributes to the strengthening of the steel plate by precipitation strengthening. However, when the V content is less than 0.010 %, the effect cannot be sufficiently obtained. Therefore, in the case of containing V, the content is preferably 0.010 % or more. On the other hand, when the V content exceeds 0.100 %, the toughness of the heat-affected zone is deteriorated. Therefore, in the case of containing V, the content is set to 0.100 % or less.

Ni: 0.50 % or less

Ni improves quench hardenability and contributes to the strengthening of the base steel and the heat-affected zone. In order to obtain this effect, the Ni content is preferably 0.01 % or more. However, because Ni is an expensive element, containing a large amount of Ni increases the cost. Therefore, in the case of containing Ni, the content is set to 0.50 % or less. The Ni content is more preferably 0.05 % or more. The Ni content is more preferably 0.40 % or less.

Ca: 0.0040 % or less

Ca has a function of fixing S in the steel to improve the toughness of the steel plate. In order to obtain this effect, the Ca content is preferably 0.0010 % or more. However, when the Ca content exceeds 0.0040 %, inclusions in the steel may be increased to deteriorate the toughness. Therefore, in the case of containing Ca, the content is set to 0.0040 % or less. The Ca content is more preferably 0.0020 % or more. The Ca content is more preferably 0.0030 % or less.

Components other than the above are Fe and inevitable impurities.

That is, the base steel plate has a chemical composition containing, in mass%,

C: 0.020 % to 0.100 %, Si: 0.05 % to 0.50 %, Mn: 0.75 % to 1.80 %, P: 0.015 % or less, S: 0.0030 % or less, A1: 0.010 % to 0.070 %, Nb: 0.005 % to 0.080 %, Ti: 0.005 % to 0.030 %, and N: 0.0010 % to 0.0060 %, and at least one selected from Cu: 0.50 % or less, Cr: 0.50 % or less, Mo: 0.50 % or less, V: 0. 100 % or less, Ni: 0.50 % or less, or Ca: 0.0040 % or less as required, with the balance being Fe and inevitable impurities.

2. Steel microstructure of base steel plate

Area ratio of bainite at 1/2 plate thickness position in thickness direction of base steel plate: 94 % or more

Bainite is an important phase for securing both strength and low-temperature toughness. In addition, bainite effectively contributes to the improvement of the steel plate strength by transformation structure strengthening. Therefore, the steel microstructure of the base steel plate needs to be bainite-based. Specifically, it is necessary to have an area ratio of bainite to the total area of the steel microstructure of 94 % or more at a 1/2 plate thickness position in the thickness direction of the base steel plate (hereinafter, also simply referred to as "1/2 plate thickness position"). The area ratio is preferably 97 % or more. The area ratio of bainite may be 100 %.

Although the steel microstructure of the base steel plate should basically be composed of bainite as described above, it may include a small amount of martensite austenite constituent, ferrite, cementite, etc. as residual microstructure other than bainite. It is acceptable if the total area ratio of the residual microstructure is 6 % or less. The area ratio of the residual microstructure may be 0 %. When the residual microstructure exceeds 6 %, the area ratio of bainite is too small to secure both strength and low-temperature toughness.

Area ratio of martensite austenite constituent at 1/2 plate thickness position in thickness direction of base steel plate: 6 % or less

As described above, bainite is an important phase for securing both strength and low-temperature toughness. In addition, bainite effectively contributes to the improvement of the steel plate strength by transformation structure strengthening. However, when martensite austenite constituent increases, especially when the area ratio of martensite austenite constituent at the 1/2 plate thickness position exceeds 6 %, the martensite austenite constituent becomes the origin of brittle fracture so that the desired low-temperature toughness cannot be obtained. Therefore, the area ratio of martensite austenite constituent at the 1/2 plate thickness position is 6 % or less. The area ratio is preferably 4 % or less. The lower limit is not particularly limited, and may be 0 %.

Martensite austenite constituent tends to be formed near the center of the base steel plate in the thickness direction, and the martensite austenite constituent formed near the center in the thickness direction affects the low-temperature toughness greatly. Therefore, in order to secure the desired low-temperature toughness, it is important to suppress the area ratio of martensite austenite constituent at the 1/2 plate thickness position.

The area ratio of each phase at the 1/2 plate thickness position is obtained as follows.

That is, the area ratio is obtained by mirror polishing an L-cross section (a cross section parallel to the rolling direction and parallel to the normal direction) of the 1/2 plate thickness position in the thickness direction of the base steel plate, then etching the cross section by nital or electrolytic etching (electrolyte solution: 100 ml distilled water + 25 g sodium hydroxide + 5 g picric acid), observing a randomly selected $1.2 \times 10^{-2}$ mm$^2$ region at 2000 times magnification under a scanning electron microscope (SEM), and interpreting the image.

Average grain diameter of bainite: 25 $\mu$m or less

Grain boundaries of bainite serve as a resistance to brittle crack propagation, so the refinement of crystal grain contributes to the improvement of low-temperature toughness. Therefore, the average grain diameter of bainite is 25 $\mu$m or less. The lower limit is not particularly limited, yet it is about 5 $\mu$m.

The average grain diameter of bainite is obtained as follows.

That is, the average grain diameter is obtained by mirror polishing an L-cross section (a cross section parallel to the rolling direction and parallel to the normal direction) of the 1/2 plate thickness position in the thickness direction of the base steel plate, measuring crystal orientation in a randomly selected $1.2 \times 10^{-2}$ mm$^2$ region (magnification: 2000) by electron back scatter diffraction (EBSD), and interpreting the image by taking a region where the angle difference between adjacent pixels is 15 ° or more as grain boundaries.

The average grain diameter $d_{area}$ is calculated according to the following equation, using the area $a_i$ occupied by each crystal grain and the circle equivalent diameter $d_i$ of each crystal grain.

$$d_{area} = \Sigma \, (a_i \cdot d_i) \, / \, \Sigma \, a_i$$

3. Shear strength of interface between the base steel plate and the cladding metal bonded or joined together: 300 MPa or more

For a clad steel plate, it is necessary to prevent a cladding metal from peeling off a base steel plate. Therefore, the shear strength of the interface between the base steel plate and the cladding metal bonded or joined together is 300 MPa or more. The upper limit is not particularly limited, yet it is about 400 MPa.

4. Cladding metal

The present disclosed clad steel plate includes a base steel plate and a cladding metal made of a corrosion-resistant alloy bonded or joined to one surface of the base steel plate.

The corrosion-resistant alloy is a Ni-based alloy of Alloy 625 or of Alloy 825 or an austenitic stainless steel.

In particular, Ni-based alloys are preferable because they exhibit high stress corrosion cracking resistance in an environment with high hydrogen sulfide partial pressure (sour environment).

The Ni-based alloy of the invention is Alloy 625 or Alloy 825. Alloy 625 is particularly preferable from the viewpoint of stress corrosion cracking resistance.

The Alloy 625 is a Ni-based alloy corresponding to NCF625 of JIS G 4902, and is preferably a Ni-based alloy having a chemical composition containing, in mass%, C: 0.030 % or less, Si: 0.02 % to 0.50 %, Mn: 0.02 % to 0.50 %, P: 0.010 % or less, S: 0.0010 % or less, Cr: 20.0 % to 23.0 %, Mo: 8.0 % to 10.0 %, Fe: 5.0 % or less, A1: 0.02 % to 0.40 %, Ti: 0.10 % to 0.40 %, and a total of Nb and Ta: 3.15 % to 4.15 %, with the balance being Ni and inevitable impurities.

In addition, the Alloy 825 is a Ni-based alloy corresponding to NCF825 of JIS G 4902, and is preferably a Ni-based alloy having a chemical composition containing, in mass%, C: 0.020 % or less, Si: 0.50 % or less, Mn: 1.00 % or less, P: 0.030 % or less, S: 0.0050 % or less, Ni: 38.0 % to 46.0 %, Cr: 19.5 % to 23.5 %, Mo: 2.50 % to 3.50 %, Cu: 1.50 % to 3.00 %, A1: 0.01 % to 0.20 %, and Ti: 0.60 % to 1.20 %, with the balance being Fe and inevitable impurities.

The following describes the preferred chemical composition of the Alloy 625 and the Alloy 825 respectively. The % representations below indicating the chemical composition are in mass% unless stated otherwise.

(1) Preferred chemical composition of Alloy 625

C: 0.030 % or less

C precipitates at grain boundaries as carbide in the thermal hysteresis during clad steel plate production, which deteriorates corrosion resistance.

For this reason, when the C content exceeds 0.030 %, the carbide precipitation is promoted and the corrosion resistance is deteriorated. Therefore, the C content is preferably 0.030 % or less. The C content is more preferably 0.020 % or less. The lower limit of the C content is not particularly limited, and may be 0 %.

Si: 0.02 % to 0.50 %

Si is added for deoxidation. When the Si content is less than 0.02 %, the effect is insufficient. On the other hand, when the Si content exceeds 0.50 %, the corrosion resistance is deteriorated. Therefore, the Si content is preferably 0.02 % to 0.50 %. The Si content is more preferably 0.02 % to 0.20 %.

Mn: 0.02 % to 0.50 %

Mn is added for deoxidation. When the Mn content is less than 0.02 %, the effect is insufficient. On the other hand, when the Mn content exceeds 0.50 %, the corrosion resistance is deteriorated. Therefore, the Mn content is preferably 0.02 % to 0.50 %. The Mn content is more preferably 0.02 % to 0.15 %.

P: 0.010 % or less

P is an impurity element that segregates in grain boundaries to deteriorate corrosion resistance. Therefore, the P content is preferably 0.010 % or less. The P content is more preferably 0.005 % or less. The lower limit of the P content is not particularly limited, and may be 0 %.

S: 0.0010 % or less

S, like P, is an impurity element that segregates in grain boundaries to deteriorate corrosion resistance. Therefore, the S content is preferably 0.0010 % or less. The S content is more preferably 0.0005 % or less. The lower limit of the S content is not particularly limited, and may be 0 %.

Cr: 20.0 % to 23.0 %

Cr forms a highly protective oxide film on the surface of metal, which improves pitting corrosion resistance and intergranular corrosion resistance. In addition, adding Cr in combination with Ni improves the stress corrosion cracking resistance in a sour environment. However, it is necessary to consider the balance between the Cr content and Ni and other alloys. In view of this, the Cr content is preferably 20.0 % to 23.0 %. The Cr content is more preferably 21.5 % to 23.0 %.

Mo: 8.0 % to 10.0 %

Mo improves pitting corrosion resistance and crevice corrosion resistance. In addition, adding Mo in combination with Ni improves the stress corrosion cracking resistance in a sour environment. However, it is necessary to consider the balance between the Mo content and Ni and other alloys. In view of this, the Mo content is preferably 8.0 % to 10.0 %. The Mo content is more preferably 8.5 % to 10.0 %.

Fe: 5.0 % or less

Fe is an impurity inevitably mixed in the case of using ferrochrome or ferromolybdenum as a raw material. When the Fe content exceeds 5.0 %, the corrosion resistance is deteriorated. Therefore, the Fe content is preferably 5.0 % or less. The Fe content is more preferably 3.5 % or less. The lower limit of the Fe content is not particularly limited, and may be 0 %.

A1: 0.02 % to 0.40 %

A1 is an effective deoxidizing element. When the A1 content is less than 0.02 %, the effect is insufficient. However, when the A1 content exceeds 0.40 %, the stress corrosion cracking resistance is deteriorated. Therefore, the A1 content is preferably 0.02 % to 0.40 %. The A1 content is more preferably 0.02 % to 0.25 %.

Ti: 0.10 % to 0.40 %

Ti is effective for fixing C. When the Ti content is less than 0.10 %, the fixation of C is incomplete, and carbide is precipitated to deteriorate the corrosion resistance. However, when the Ti content exceeds 0.40 %, Ti precipitates as an intermetallic compound to lower the bonding or joining property with the base steel plate. Therefore, the Ti content is preferably 0.10 % to 0.40 %. The Ti content is more preferably 0.10 % to 0.30 %.

Total amount of Nb and Ta: 3.15 % to 4.15 %

Both Nb and Ta are effective for fixing C. When the total amount of Nb and Ta is less than 3.15 %, the effect is insufficient. On the other hand, when the total amount of Nb and Ta exceeds 4.15 %, Nb and Ta form a low-melting point intermetallic compound to lower the hot workability. Therefore, the total amount of Nb and Ta is preferably 3.15 % to 4.15 %.

Components other than the above are Ni and inevitable impurities. Ni is an element that improves corrosion resistance. In particular, Ni significantly improves the stress corrosion cracking resistance in a sour environment. Therefore, the Ni content is preferably 58 % or more.

(2) Preferred chemical composition of Alloy 825

C: 0.020 % or less

C precipitates at grain boundaries as carbide in the thermal hysteresis during clad steel plate production, which deteriorates corrosion resistance. Therefore, when the C content exceeds 0.020 %, the carbide precipitation is promoted and the corrosion resistance is deteriorated. Therefore, the C content is preferably 0.020 % or less. The C content is more preferably 0.015 % or less. The lower limit of the C content is not particularly limited, and may be 0 %.

Si: 0.50 % or less

Si is added for deoxidation. However, when the Si content exceeds 0.50 %, Si remains as nonmetallic inclusions and deteriorates the corrosion resistance. Therefore, the Si content is preferably 0.50 % or less. The Si content is more preferably 0.20 % or less. The lower limit of the Si content is not particularly limited. However, the Si content is preferably 0.02 % or more from the viewpoint of sufficiently obtaining the effect of deoxidation.

Mn: 1.00 % or less

Mn is added for deoxidation. However, when the Mn content exceeds 1.00 %, the corrosion resistance is deteriorated. Therefore, the Mn content is preferably 1.00 % or less. The Mn content is more preferably 0.50 % or less. The lower limit of the Mn content is not particularly limited. However, the Mn content is preferably 0.02 % or more from the viewpoint of sufficiently obtaining the effect of deoxidation.

P: 0.030 % or less

P is an impurity element that segregates in grain boundaries to deteriorate corrosion resistance. Therefore, the P content is preferably 0.030 % or less. The P content is more preferably 0.020 % or less. The lower limit of the P content is not particularly limited, and may be 0 %.

S: 0.0050 % or less

S, like P, is an impurity element that segregates in grain boundaries to deteriorate corrosion resistance. Therefore, the S content is preferably 0.0050 % or less. The S content is more preferably 0.0010 % or less. The lower limit of the S content is not particularly limited, and may be 0 %.

Ni: 38.0 % to 46.0 %

Ni is an element that improves corrosion resistance. In particular, Ni significantly improves the stress corrosion cracking resistance in a sour environment. However, because Ni is an expensive element, adding a large amount of Ni increases the cost. Therefore, Ni should be added in consideration of the balance between the effect of improving corrosion resistance and the cost. In view of this, the Ni content is preferably 38.0 % to 46.0 %.

Cr: 19.5 % to 23.5 %

Cr forms a highly protective oxide film on the surface of metal, which improves pitting corrosion resistance and intergranular corrosion resistance. In addition, adding Cr in combination with Ni improves the stress corrosion cracking resistance in a sour environment. However, it is necessary to consider the balance between the Cr content and Ni and other alloys. In view of this, the Cr content is preferably 19.5 % to 23.5 %. The Cr content is more preferably 21.5 % to 23.5 %.

Mo: 2.50 % to 3.50 %

Mo improves pitting corrosion resistance and crevice corrosion resistance. In addition, adding Mo in combination with Ni improves the stress corrosion cracking resistance in a sour environment. However, it is necessary to consider the balance between the Mo content and Ni and other alloys. In view of this, the Mo content is preferably 2.50 % to 3.50 %. The Mo content is more preferably 3.00 % to 3.50 %.

Cu: 1.50 % to 3.00 %

Cu effectively improves general corrosion resistance. However, when the Cu content is less than 1.50 %, the effect is insufficient. On the other hand, when the Cu content exceeds 3.00 %, the effect is saturated. Therefore, the Cu content is preferably 1.50 % to 3.00 %. The Cu content is more preferably 1.80 % to 3.00 %.

A1: 0.01 % to 0.20 %

A1 is an element effective for deoxidation. However, when the A1 content is less than 0.01 %, the effect is insufficient. On the other hand, when the A1 content exceeds 0.20 %, the stress corrosion cracking resistance is deteriorated. Therefore, the A1 content is preferably 0.01 % to 0.20 %. The A1 content is more preferably 0.10 % or more. In addition, the A1 content is more preferably 0.15 % or less.

Ti: 0.60 % to 1.20 % or less

Ti is effective for fixing C. When the Ti content is less than 0.60 %, the fixation of C is incomplete, and carbide is precipitated to deteriorate the corrosion resistance. However, when the Ti content exceeds 1.20 %, Ti precipitates as an intermetallic compound to lower the bonding or joining property with the base steel plate. Therefore, the Ti content is preferably 0.60 % to 1.20 %. The Ti content is more preferably 0.70 % to 1.20 %.

Components other than the above are Fe and inevitable impurities.

The preferred chemical compositions of Alloy 625 and Alloy 825 are as described above. In addition to Ni-based alloys, examples of the corrosion-resistant alloy also include austenitic stainless steels.

Examples of the austenitic stainless steel include SUS304, SUS316, SUS304L and SUS316L, which are austenitic stainless steels defined by JIS.

In addition, the austenitic stainless steel preferably has a chemical composition containing, in mass%, C: 0.030 % or less, Si: 1.00 % or less, Mn: 2.00 % or less, P: 0.045 % or less, S: 0.030 % or less, Ni: 12.00 % to 15. 00 %, Cr: 16.00 % to 18.00 %, and Mo: 2.00 % to 3.00 %, with the balance being Fe and inevitable impurities.

The following describes a preferred chemical composition of the austenitic stainless steel. The % representations below indicating the chemical composition are in mass% unless stated otherwise.

(3) Preferred chemical composition of austenitic stainless steel C: 0.030 % or less

C precipitates at grain boundaries as carbide in the thermal hysteresis during clad steel plate production, which deteriorates corrosion resistance. For this reason, when the C content exceeds 0.030 %, the carbide precipitation is promoted and the corrosion resistance is deteriorated. Therefore, the C content is preferably 0.030 % or less. The C content is more preferably 0.020 % or less. The C content is still more preferably 0.015 % or less. The lower limit of the C content is not particularly limited, and may be 0 %.

Si: 1.00 % or less

Si is added for deoxidation. However, when the Si content exceeds 1.00 %, Si remains as nonmetallic inclusions and deteriorates the corrosion resistance. Therefore, the Si content is preferably 1.00 % or less. The Si content is more preferably 0.75 % or less. The lower limit of the Si content is not particularly limited, and may be 0 %.

Mn: 2.00 % or less

Mn is added for deoxidation. However, when the Mn content exceeds 2.00 %, the corrosion resistance is deteriorated. Therefore, the Mn content is preferably 2.00 % or less. The Mn content is more preferably 1.40 % or less. The Mn content is still more preferably 1.00 % or less. The lower limit of the Mn content is not particularly limited, and may be 0 %.

P: 0.045 % or less

P is an impurity element that segregates in grain boundaries to deteriorate corrosion resistance. Therefore, the P content is preferably 0.045 % or less. The P content is more preferably 0.030 % or less. The lower limit of the P content is not particularly limited, and may be 0 %.

S: 0.030 % or less

S, like P, is an impurity element that segregates in grain boundaries to deteriorate corrosion resistance. Therefore, the S content is preferably 0.030 % or less. The S content is more preferably 0.010 % or less. The lower limit of the S content is not particularly limited, and may be 0 %.

Ni: 12.00 % to 15.00 %

Ni is an element that improves corrosion resistance. In particular, Ni significantly improves the stress corrosion cracking resistance in a sour environment. However, because Ni is an expensive element, adding a large amount of Ni increases the cost. Therefore, Ni should be added in consideration of the balance between the effect of improving corrosion resistance and the cost. In view of this, the Ni content is preferably 12.00 % to 15.00 %. The Ni content is more preferably 12.50 % or more. In addition, the Ni content is more preferably 14.50 % or less.

Cr: 16.00 % to 18.00 %

Cr forms a highly protective oxide film on the surface of metal, which improves pitting corrosion resistance and intergranular corrosion resistance. In addition, adding Cr in combination with Ni improves the stress corrosion cracking resistance in a sour environment. However, it is necessary to consider the balance between the Cr content and Ni and other alloys. In view of this, the Cr content is preferably 16.00 % to 18.00 %. The Cr content is more preferably 16.50 % or more. In addition, the Cr content is more preferably 17.50 % or less.

Mo: 2.00 % to 3.00 %

Mo improves pitting corrosion resistance and crevice corrosion resistance. In addition, adding Mo in combination with Ni improves the stress corrosion cracking resistance in a sour environment. However, it is necessary to consider the balance between the Mo content and Ni and other alloys. In view of this, the Mo content is preferably 2.00 % to 3.00 %. The Mo content is more preferably 2.20 % or more. In addition, the Mo content is more preferably 2.80 % or less.
Components other than the above are Fe and inevitable impurities.

5. Production method

The following describes a method of producing the clad steel plate of the present disclosure.
A method of producing a clad steel plate according to an embodiment of the present disclosure includes:

stacking a base steel plate material having the chemical composition of the above-described base steel plate and a cladding metal material made of a corrosion-resistant alloy to prepare a slab, and heating the slab to a surface temperature in a temperature range of 1050 °C to 1200 °C;
subsequently, subjecting the slab to first rolling where a rolling reduction ratio is 2.0 or more when a surface temperature is in a temperature range of 950 °C or higher, and then to second rolling where a cumulative rolling reduction is 50 % or more when a surface temperature is in a temperature range of 900 °C or lower and a finish rolling temperature is a surface temperature of 800 °C or higher, to obtain a rolled plate including a base steel plate and a cladding metal;
subsequently, subjecting the rolled plate to accelerated cooling where a start cooling temperature is a surface temperature of $Ar_3$ or higher, an average cooling rate is 5 °C/s or more, and a stop cooling temperature is a temperature of 500 °C or lower at a 1/2 plate thickness position in a thickness direction of the base steel plate; and
further subjecting the rolled plate to tempering where a temperature at the 1/2 plate thickness position in the thickness direction of the base steel plate is in a temperature range of 350 °C to 600 °C.

The slab is obtained by tack welding a base steel plate material and a cladding metal material, where a base steel plate material and a cladding metal material are, for example, stacked on top of one another in an order of (a) a base steel plate material/a cladding metal material, or (b) a base steel plate material/a cladding metal material/a cladding metal material/a base steel plate material, and subjected to electron beam welding in a vacuum environment (under a reduced pressure), specifically under a pressure of $10^{-4}$ torr or less.
In the case of using a slab in the form of (b), it is possible to obtain a product plate of a clad steel plate including a base steel plate and a cladding metal bonded or joined to one surface of the base steel plate by applying a release material in advance between the cladding metal material and the cladding metal material and separating the upper and lower portions after the tempering treatment.

(1) Slab heating

Slab heating temperature: 1050 °C to 1200 °C

When the slab heating temperature is lower than 1050 °C, Nb or the like contained in the base steel plate material is not sufficiently dissolved, rendering it difficult to secure the strength. On the other hand, when the slab heating temperature exceeds 1200 °C, the austenite crystal grains in the base steel plate material are coarsened and the toughness is deteriorated. Therefore, the slab heating temperature is 1050 °C to 1200 °C. The slab heating temperature is preferably 1050 °C to 1100 °C.

(2) Clad rolling

- First rolling

Rolling reduction ratio when the surface temperature is in a temperature range of 950 °C or higher: 2.0 or more

The bonding or joining property between the base steel plate and the cladding metal of the clad steel plate is secured by rolling at a high temperature range. That is, during the rolling at a high temperature range, the deformation resistance between the base steel plate and the cladding metal is reduced and a good bonding or joining interface is formed, which facilitates the mutual diffusion of elements at the bonding or joining interface. In this way, the bonding or joining property between the base steel plate and the cladding metal is secured.

Therefore, in the first rolling performed to secure the bonding or joining property between the base steel plate and the cladding metal, it is necessary to have a rolling reduction ratio of 2.0 or more when the surface temperature (of the slab) is in a temperature range of 950 °C or higher. The rolling reduction ratio is preferably 2.5 or more. The upper limit is not particularly limited, yet it is preferably about 8.0 from the viewpoint of manufacturability.

The rolling reduction ratio when the surface temperature is in a temperature range of 950 °C or higher is obtained by: [slab thickness before the first rolling] ÷ [slab thickness after the rolling where the surface temperature is in a temperature range of 950 °C or higher].

The rolling reduction ratio when the surface temperature is in a temperature range of 950 °C or higher is as described above, and the rolling reduction ratio when the surface temperature is in a temperature range of 1000 °C or higher is preferably 2.0 or more and more preferably 2.5 or more.

However, in the case of using a Ni-based alloy of Alloy 825 or an austenitic stainless steel as the cladding metal material, the desired bonding or joining property between the base steel plate and the cladding metal can be secured as long as the rolling reduction ratio is 1.5 or more and preferably 1.8 or more when the surface temperature is in a temperature range of 950 °C or higher. The upper limit is preferably about 8.0 as described above.

- Second rolling

Cumulative rolling reduction when the surface temperature is in a temperature range of 900 °C or lower: 50 % or more

Rolling in the $\gamma$ non-recrystallization temperature range flattens the crystal grains, thereby increasing the grain boundary area and introducing a deformation zone. In this way, nucleation sites are increased during the subsequent accelerated cooling. As a result, the steel microstructure of the base steel plate is refined, and excellent low-temperature toughness can be secured. In view of this, the rolling where the surface temperature (of the slab) is in a temperature range of 900 °C or lower is taken as the second rolling, and the cumulative rolling reduction in the second rolling is set to 50 % or more. It is preferable to take the rolling where the surface temperature is in a temperature range of 870 °C or lower as the second rolling and to set the cumulative rolling reduction in the second rolling to 50 % or more. The upper limit is not particularly limited, yet it is about 85 %.

The cumulative rolling reduction when the surface temperature is in a temperature range of 900 °C or lower is obtained by: [cumulative rolling reduction amount when the surface temperature is in a temperature range of 900 °C or lower] / [slab thickness before the second rolling] $\times$ 100.

Finish rolling temperature: a surface temperature of 800 °C or higher

When the finish rolling temperature is a surface temperature lower than 800 °C, the bonding or joining property is deteriorated. Therefore, the finish rolling temperature is a slab surface temperature of 800 °C or higher. It is preferably a slab surface temperature of 840 °C or higher. The upper limit is not particularly limited, yet it is about 900 °C.

However, in the case of using a Ni-based alloy of Alloy 825 or an austenitic stainless steel as the cladding metal material, the desired bonding or joining property between the base steel plate and the cladding metal can be secured as long as the finish rolling temperature is a slab surface temperature of 750 °C or higher and preferably 780 °C or higher. The upper limit is about 900 °C as described above.

(3) Accelerated cooling (quenching)

Start cooling temperature: a surface temperature of $Ar_3$ or higher

When the start cooling temperature is a surface temperature of lower than $Ar_3$, ferrite formation occurs before bainite transformation in the base steel plate. As a result, the desired strength cannot be obtained, and the Charpy absorbed energy decreases. Therefore, the start cooling temperature is a rolled plate surface temperature of $Ar_3$ or higher. The upper limit is not particularly limited, yet it is about 900 °C.

The temperature of $Ar_3$ can be determined by the following equation.

$$Ar_3 \ (^\circ C) = 910 - 310C - 80Mn - 20Cu - 15Cr - 55Ni - 80Mo$$

Note that the symbols of element in the equation refer to the content (mass%) of each element in the base steel plate.

Average cooling rate: 5 °C/s or more

When the average cooling rate is less than 5 °C/s, ferrite transformation occurs in the base steel plate. As a result, the desired strength cannot be obtained, and the Charpy absorbed energy decreases. Therefore, the cooling rate is 5 °C/s or more. The cooling rate is preferably 10 °C/s or more. The upper limit is not particularly limited, yet it is about 50 °C/s.

The average cooling rate is calculated by dividing the difference between the start cooling temperature at the 1/2 plate thickness position in the thickness direction of the base steel plate portion of the rolled plate and the stop cooling temperature at the 1/2 plate thickness position in the thickness direction of the base steel plate portion of the rolled plate by the cooling time.

Stop cooling temperature: 500 °C or lower

When the stop cooling temperature is higher than 500 °C, structures that adversely affect the toughness and the Charpy absorbed energy, such as coarse cementite and martensite austenite constituent, are formed in the base steel plate. Therefore, the stop cooling temperature is 500 °C or lower. The stop cooling temperature is preferably 300 °C or lower. The lower limit is not particularly limited, yet it is about 25 °C.

The stop cooling temperature is a temperature at the 1/2 plate thickness position in the thickness direction of the base steel plate portion of the rolled plate.

(4) Tempering

Tempering temperature: 350 °C to 600 °C

After the above-described accelerated cooling, the rolled plate is heated and tempered. When the tempering temperature is lower than 350 °C, decomposition of martensite austenite constituent that adversely affects the toughness of the base steel plate and recovery of dislocation are insufficient, and the toughness of the base steel plate is deteriorated. On the other hand, when the tempering temperature exceeds 600 °C, precipitates such as cementite are coarsened to deteriorate the toughness of the base steel plate. In addition, the formation of precipitate may deteriorate the corrosion resistance of the cladding metal. Therefore, the tempering temperature is 350 °C to 600 °C. The tempering temperature is preferably 400 °C or higher. In addition, the tempering temperature is preferably 500 °C or lower.

The tempering temperature is a temperature at the 1/2 plate thickness position in the thickness direction of the base steel plate portion of the rolled plate.

EXAMPLES

(Example 1)

Clad steel plates were produced by stacking a base steel plate material having the chemical composition listed in Table 1 (with the balance being Fe and inevitable impurities) and a cladding metal material of a Ni-based alloy (Alloy 625) having the chemical composition listed in Table 2 (with the balance being Ni and inevitable impurities) on top of one another in an order of (a) a base steel plate material/a cladding metal material, or (b) a base steel plate material/a cladding metal material/a cladding metal material/a base steel plate material, to prepare a slab; subjecting the slab to clad rolling (first rolling and second rolling) under the conditions listed in Table 3 to obtain a rolled plate; and then subjecting the obtained rolled plate to accelerated cooling and tempering under the conditions listed in Table 3 to obtain a clad steel plate with a thickness of 30 mm (where the thickness of the base steel plate was 27 mm and the thickness of the cladding metal was 3 mm).

Test pieces for tensile test and DWTT test were taken from each clad steel plate thus obtained, and tensile test and DWTT test (test temperature: -30 °C) were performed in accordance with API-5L to determine the tensile strength, yield strength, and percent ductile fracture: $DWTTSA_{-30 °C}$ of each clad steel plate. The target values of tensile strength and percent ductile fracture: $DWTTSA_{-30 °C}$ are as follows.

Tensile strength: 535 MPa or more

Percent ductile fracture: $DWTTSA_{-30 °C}$: 85 % or more

($DWTTSA_{-30 °C}$ of 90 % or more would be excellent)

In addition, a shear test was performed in accordance with JISG0601 to determine the shear strength at the interface between the base steel plate and the cladding metal bonded or joined together, by which the bonding or joining property between the base steel plate and the cladding metal was evaluated. The bonding or joining property was evaluated as good if the shear strength at the bonding or joining interface was 300 MPa or more.

Furthermore, identification of steel microstructure, calculation of area ratio of each phase, and calculation of average grain diameter of bainite were performed with the above-described method.

The results are listed in Table 4.

Table 1

| Base steel No. | Chemical composition of base steel plate (mass%) | | | | | | | | | | | | | | | Ar₃ (°C) | Remarks |
|---|---|---|---|---|---|---|---|---|---|---|---|---|---|---|---|---|---|
| | C | Si | Mn | P | S | Al | Nb | Ti | N | Cu | Ni | Cr | Mo | V | Ca | $Ar_3$ (°C) | Remarks |
| A1 | 0.015 | 0.12 | 0.50 | 0.007 | 0.0006 | 0.03 | 0.052 | 0.002 | 0.0042 | 0.21 | 0.27 | 0.08 | 0.090 | 0.050 | 0.0025 | 838 | Comparative steel |
| A2 | 0.028 | 0.41 | 1.80 | 0.006 | 0.0005 | 0.05 | 0.071 | 0.014 | 0.0051 | 0.26 | 0.24 | 0.03 | 0.100 | 0.002 | 0.0035 | 730 | Conforming steel |
| A3 | 0.040 | 0.15 | 1.60 | 0.006 | 0.0006 | 0.03 | 0.051 | 0.014 | 0.0056 | 0.25 | 0.23 | 0.02 | 0.140 | 0.002 | 0.0026 | 740 | Conforming steel |
| A4 | 0.059 | 0.21 | 1.40 | 0.007 | 0.0006 | 0.04 | 0.062 | 0.015 | 0.0056 | 0.43 | 0.44 | 0.02 | 0.050 | 0.030 | 0.0025 | 743 | Conforming steel |
| A5 | 0.077 | 0.14 | 1.20 | 0.007 | 0.0005 | 0.04 | 0.038 | 0.016 | 0.0055 | 0.46 | 0.45 | 0.05 | 0.100 | 0.002 | 0.0027 | 747 | Conforming steel |
| A6 | 0.098 | 0.16 | 0.90 | 0.006 | 0.0005 | 0.03 | 0.024 | 0.020 | 0.0060 | 0.42 | 0.48 | 0.21 | 0.100 | 0.002 | 0.0028 | 762 | Conforming steel |
| A7 | 0.041 | 0.16 | 1.60 | 0.008 | 0.0006 | 0.03 | 0.051 | 0.014 | 0.0053 | 0.03 | 0.05 | 0.21 | 0.140 | 0.002 | 0.0026 | 752 | Conforming steel |
| A8 | 0.042 | 0.15 | 1.10 | 0.006 | 0.0006 | 0.03 | 0.052 | 0.010 | 0.0045 | 0.04 | 0.03 | 0.39 | 0.380 | 0.002 | 0.0025 | 770 | Conforming steel |
| A9 | 0.108 | 0.16 | 1.90 | 0.007 | 0.0004 | 0.04 | 0.050 | 0.016 | 0.0049 | 0.26 | 0.21 | 0.03 | 0.140 | 0.090 | 0.0025 | 696 | Comparative steel |
| A10 | 0.039 | 0.55 | 1.60 | 0.007 | 0.0004 | 0.03 | 0.091 | 0.035 | 0.0050 | 0.28 | 0.23 | 0.02 | 0.140 | 0.002 | 0.0015 | 740 | Comparative steel |
| A11 | 0.042 | 0.15 | 1.60 | 0.006 | 0.0006 | 0.03 | 0.003 | 0.014 | 0.0055 | 0.27 | 0.24 | 0.02 | 0.140 | 0.002 | 0.0027 | 739 | Comparative steel |
| A12 | 0.061 | 0.15 | 1.80 | 0.006 | 0.0006 | 0.03 | 0.078 | 0.014 | 0.0056 | - | - | - | - | - | - | 747 | Conforming steel |
| A13 | 0.055 | 0.40 | 1.78 | 0.006 | 0.0004 | 0.03 | 0.079 | 0.015 | 0.0058 | - | - | - | - | - | - | 751 | Conforming steel |

Table 2

| Cladding metal No. | Chemical composition of cladding metal (mass%) | | | | | | | | | | |
|---|---|---|---|---|---|---|---|---|---|---|---|
| | C | Si | Mn | P | S | Cr | Mo | Fe | Al | Ti | Nb + Ta |
| B1 | 0.014 | 0.16 | 0.13 | 0.003 | 0.0008 | 22.1 | 9.2 | 2.9 | 0.20 | 0.22 | 4.09 |
| B2 | 0.009 | 0.16 | 0.14 | 0004 | 0.0007 | 21.6 | 8.9 | 3.3 | 0.18 | 0.22 | 4.15 |
| B3 | 0.018 | 0.18 | 0.15 | 0.003 | 0.0009 | 22.3 | 8.4 | 3.2 | 0.16 | 0.25 | 3.89 |

Table 3

| Producing condition No. | Slab heating | Clad rolling | | | Accelerated cooling | | | Tempering |
| | | First rolling | Second rolling | | | | | |
| | Slab heating temperature (°C) | Rolling reduction ratio at 950 °C or higher | Rolling reduction at 900 °C or lower (%) | Finish rolling temperature (°C) | Start cooling temperature (°C) | Cooling rate (°C) | Stop cooling temperature (°C) | Tempering temperature (°C) |
|---|---|---|---|---|---|---|---|---|
| C1 | 1150 | 2.0 | 50 | 820 | 800 | 10 | 200 | 500 |
| C2 | 1050 | 2.0 | 60 | 820 | 800 | 11 | 200 | 500 |
| C3 | 1150 | 2.5 | 50 | 840 | 820 | 11 | 200 | 500 |
| C4 | 1150 | 2.0 | 50 | 820 | 800 | 10 | 450 | 500 |
| C5 | 1150 | 2.0 | 50 | 820 | 800 | 10 | 200 | 550 |
| C6 | 1150 | 2.0 | 50 | 820 | 800 | 10 | 200 | 400 |
| C7 | 1300 | 2.0 | 50 | 840 | 820 | 10 | 200 | 500 |
| C8 | 1000 | 2.0 | 50 | 840 | 700 | 10 | 200 | 500 |
| C9 | 1100 | 1.8 | 50 | 840 | 820 | 10 | 200 | 500 |
| C10 | 1100 | 2.0 | 40 | 840 | 820 | 10 | 200 | 500 |
| C11 | 1100 | 2.0 | 50 | 780 | 760 | 10 | 200 | 500 |
| C12 | 1100 | 2.0 | 50 | 840 | 820 | 1 | 200 | 500 |
| C13 | 1100 | 2.0 | 50 | 840 | 820 | 10 | 550 | 300 |
| C14 | 1100 | 2.0 | 50 | 840 | 820 | 10 | 200 | 650 |

18

Table 4

| No. | Base steel No. | Cladding metal No. | Producing condition No. | Steel microstructure of base steel plate | | | | | Evaluation result | | | | Remarks |
|---|---|---|---|---|---|---|---|---|---|---|---|---|---|
| | | | | Area ratio of bainite at 1/2 plate thickness position (%) | Area ratio of residual microstructure (%) | Residual microstructure* | Average grain diameter of bainite (μm) | Area ratio of martensite austenite constituent at 1/2 plate thickness position (%) | YS (MPa) | TS (MPa) | DWTT SA$_{-30\,°C}$ (%) | Shear strength at bonding or joining interface (MPa) | |
| 1 | A1 | B1 | C1 | 10 | 90 | M, F, θ | 25 | 1 | 430 | 500 | 98 | 310 | Comparative example |
| 2 | A2 | B1 | C1 | 96 | 4 | M, θ | 21 | 3 | 510 | 605 | 90 | 315 | Example |
| 3 | A3 | B1 | C1 | 96 | 4 | M, θ | 22 | 3 | 500 | 585 | 95 | 305 | Example |
| 4 | A4 | B1 | C1 | 97 | 3 | M, θ | 18 | 2 | 495 | 585 | 98 | 320 | Example |
| 5 | A5 | B1 | C1 | 96 | 4 | M, θ | 20 | 2 | 495 | 585 | 95 | 320 | Example |
| 6 | A6 | B1 | C1 | 96 | 4 | M, θ | 20 | 2 | 500 | 585 | 90 | 315 | Example |
| 7 | A7 | B1 | C1 | 96 | 4 | M, θ | 20 | 3 | 505 | 595 | 98 | 310 | Example |
| 8 | A8 | B1 | C1 | 96 | 4 | M, θ | 21 | 3 | 505 | 590 | 95 | 310 | Example |
| 9 | A9 | B1 | C1 | 92 | 8 | M, θ | 19 | 7 | 540 | 640 | 65 | 310 | Comparative example |
| 10 | A10 | B1 | C1 | 94 | 6 | M, θ | 18 | 5 | 510 | 600 | 45 | 315 | Comparative example |
| 11 | A11 | B1 | C1 | 97 | 3 | M, θ | 35 | 2 | 475 | 565 | 55 | 320 | Comparative example |
| 12 | A3 | B1 | C2 | 97 | 3 | M, θ | 19 | 2 | 500 | 590 | 100 | 300 | Example |
| 13 | A3 | B1 | C3 | 97 | 3 | M, θ | 24 | 2 | 500 | 585 | 88 | 380 | Example |
| 14 | A3 | B1 | C4 | 94 | 6 | M, θ | 22 | 5 | 490 | 595 | 85 | 320 | Example |

EP 3 604 597 B1

(continued)

| No. | | | | Area ratio of bainite at 1/2 plate thickness position (%) | Area ratio of residual microstructure (%) | Residual microstructure* | Average grain diameter of bainite (μm) | Area ratio of martensite austenite constituent at 1/2 plate thickness position (%) | YS (MPa) | TS (MPa) | DWTT SA-30°C (%) | Shear strength at bonding or joining interface (MPa) | |
|---|---|---|---|---|---|---|---|---|---|---|---|---|---|
| 15 | A3 | B1 | C5 | 98 | 2 | M, θ | 22 | 1 | 500 | 580 | 90 | 320 | Example |
| 16 | A3 | B1 | C6 | 95 | 5 | M, θ | 22 | 4 | 490 | 590 | 98 | 320 | Example |
| 17 | A3 | B1 | C7 | 97 | 3 | M, θ | 35 | 2 | 500 | 585 | 45 | 340 | Comparative example |
| 18 | A3 | B1 | C8 | 98 | 2 | M, θ | 22 | 1 | 440 | 525 | 95 | 220 | Comparative example |
| 19 | A3 | B1 | C9 | 97 | 3 | M, θ | 25 | 2 | 495 | 585 | 85 | 220 | Comparative example |
| 20 | A3 | B1 | C10 | 97 | 3 | M, θ | 28 | 2 | 595 | 580 | 65 | 320 | Comparative example |
| 21 | A3 | B1 | C11 | 97 | 3 | M, θ | 20 | 2 | 505 | 590 | 98 | 200 | Comparative example |
| 22 | A3 | B1 | C12 | 10 | 90 | M, F, θ | 20 | 1 | 440 | 520 | 100 | 320 | Comparative example |
| 23 | A3 | B1 | C13 | 91 | 9 | M, θ | 22 | 7 | 490 | 600 | 80 | 320 | Comparative example |
| 24 | A3 | B1 | C14 | 93 | 7 | M, θ | 22 | 1 | 505 | 575 | 65 | 320 | Comparative example |
| 25 | A2 | B2 | C1 | 97 | 3 | M, θ | 22 | 2 | 500 | 585 | 95 | 305 | Example |
| 26 | A2 | B3 | C1 | 97 | 3 | M, θ | 22 | 2 | 500 | 585 | 95 | 305 | Example |
| 27 | A12 | B1 | C1 | 97 | 3 | M, θ | 22 | 2 | 495 | 585 | 95 | 310 | Example |
| 28 | A13 | B1 | C1 | 95 | 5 | M, θ | 22 | 4 | 495 | 590 | 85 | 310 | Example |

* M: martensite austenite constituent, F: ferrite phase, θ: cementite

It can be understood from Table 4 that each Example had a tensile strength of 535 MPa or more, a percent ductile fracture: DWTTSA$_{-30\ °C}$ of 85 % or more, and good bonding or joining property.

On the other hand, for the Comparative Example No. 1 in Table 4, where the C, Mn and Ti contents in the base steel plate were less than the appropriate range, a large amount of ferrite formed during the cooling, and precipitation strengthening by Ti was insufficient. As a result, the desired tensile strength could not be obtained.

For the Comparative Example No. 9, where the C and Mn contents in the base steel plate were more than the appropriate range, the amount of martensite austenite constituent increased, and the desired low-temperature toughness could not be obtained.

For the Comparative Example No. 10, where the Si, Nb and Ti contents in the base steel plate were more than the appropriate range, problems such as coarsening of TiN occurred, and the coarsened TiN became the origin of ductile cracks and brittle cracks. As a result, the desired low-temperature toughness could not be obtained.

For the Comparative Example No. 11, where the Nb content was less than the appropriate range, the expanding of the $\gamma$ non-recrystallization temperature range was insufficient and the austenite was coarsened, so that the product plate could not obtain fine bainite crystal grains. As a result, the desired low-temperature toughness could not be obtained.

For the Comparative Example No. 17, where the slab heating temperature was higher than the appropriate range, the austenite was coarsened, and the product plate could not obtain fine bainite crystal grains. As a result, the desired low-temperature toughness could not be obtained.

For the Comparative Example No. 18, where the slab heating temperature was lower than the appropriate range, the dissolving of strengthening elements was insufficient, and the desired tensile strength could not be obtained. In addition, the bonding or joining property between the base steel plate and the cladding metal was insufficient.

For the Comparative Example No. 19, where the rolling reduction ratio when the surface temperature was in a temperature range of 950 °C or higher was less than the appropriate range, the desired bonding or joining property between the base steel plate and the cladding metal could not be obtained.

For the Comparative Example No. 20, where the cumulative rolling reduction when the surface temperature was in a temperature range of 900 °C or lower was less than the appropriate range, the refinement of bainite was insufficient, and the desired low-temperature toughness could not be obtained.

For the Comparative Example No. 21, where the finish rolling temperature was lower than the appropriate range, the desired bonding or joining property between the base steel plate and the cladding metal could not be obtained.

For the Comparative Example No. 22, where the average cooling rate was lower than the appropriate range, a large amount of ferrite formed during the cooling, and the desired tensile strength could not be obtained.

For the Comparative Example No. 23, where the stop cooling temperature was higher than the appropriate range and the tempering temperature was lower than the appropriate range, there was a large amount of martensite austenite constituent, and the desired low-temperature toughness could not be obtained.

For the Comparative Example No. 24, where the tempering temperature was higher than the appropriate range, the precipitates (cementite) were coarsened, and the desired low-temperature toughness could not be obtained.

(Example 2)

Clad steel plates were produced by stacking a base steel plate material having the chemical composition listed in Table 5 (with the balance being Fe and inevitable impurities) and a cladding metal material of a Ni-based alloy (Alloy 825) having the chemical composition listed in Table 6 (with the balance being Fe and inevitable impurities) on top of one another in an order of (a) a base steel plate material/a cladding metal material, or (b) a base steel plate material/a cladding metal material/a cladding metal material/a base steel plate material, to prepare a slab; subjecting the slab to clad rolling (first rolling and second rolling) under the conditions listed in Table 7 to obtain a rolled plate; and then subjecting the obtained rolled plate to accelerated cooling and tempering under the conditions listed in Table 7 to obtain a clad steel plate with a thickness of 30 mm (where the thickness of the base steel plate was 27 mm and the thickness of the cladding metal was 3 mm).

Test pieces for tensile test and DWTT test were taken from each clad steel plate thus obtained, and tensile test and DWTT test (test temperature: -30 °C) were performed in accordance with API-5L to determine the tensile strength, yield strength, and percent ductile fracture: DWTTSA$_{-30\ °C}$ of each clad steel plate. The target values of tensile strength and percent ductile fracture: DWTTSA$_{-30\ °C}$ are as follows.

Tensile strength: 535 MPa or more

Percent ductile fracture: DWTTSA$_{-30\ °C}$: 85 % or more

(DWTTSA$_{-30\ °C}$ of 90 % or more would be excellent)

In addition, a shear test was performed in accordance with JISG0601 to determine the shear strength at the interface between the base steel plate and the cladding metal bonded or joined together, by which the bonding or joining property between the base steel plate and the cladding metal was evaluated. The bonding or joining property was evaluated as good if the shear strength at the bonding or joining interface was 300 MPa or more.

Furthermore, identification of steel microstructure, calculation of area ratio of each phase, and calculation of average grain diameter of bainite were performed with the above-described method.

The results are listed in Table 8.

Table 5

| Base steel No. | Chemical composition of base steel plate (mass%) | | | | | | | | | | | | | | | Ar$_3$ (°C) | Remarks |
|---|---|---|---|---|---|---|---|---|---|---|---|---|---|---|---|---|---|
| | C | Si | Mn | P | S | Al | Nb | Ti | N | Cu | Ni | Cr | Mo | V | Ca | | |
| A1 | 0.015 | 0.12 | 0.50 | 0.007 | 0.0006 | 0.03 | 0.052 | 0.002 | 0.0042 | 0.21 | 0.27 | 0.08 | 0.090 | 0.050 | 0.0025 | 838 | Comparative steel |
| A2 | 0.028 | 0.41 | 1.80 | 0.006 | 0.0005 | 0.05 | 0.071 | 0.014 | 0.0051 | 0.26 | 0.24 | 0.03 | 0.100 | 0.002 | 0.0035 | 730 | Conforming steel |
| A3 | 0.040 | 0.15 | 1.60 | 0.006 | 0.0006 | 0.03 | 0.051 | 0.014 | 0.0056 | 0.25 | 0.23 | 0.02 | 0.140 | 0.002 | 0.0026 | 740 | Conforming steel |
| A4 | 0.059 | 0.21 | 1.40 | 0.007 | 0.0006 | 0.04 | 0.062 | 0.015 | 0.0056 | 0.43 | 0.44 | 0.02 | 0.050 | 0.030 | 0.0025 | 743 | Conforming steel |
| A5 | 0.077 | 0.14 | 1.20 | 0.007 | 0.0005 | 0.04 | 0.038 | 0.016 | 0.0055 | 0.46 | 0.45 | 0.05 | 0.100 | 0.002 | 0.0027 | 747 | Conforming steel |
| A6 | 0.098 | 0.16 | 0.90 | 0.006 | 0.0005 | 0.03 | 0.024 | 0.020 | 0.0060 | 0.42 | 0.48 | 0.21 | 0.100 | 0.002 | 0.0028 | 762 | Conforming steel |
| A7 | 0.041 | 0.16 | 1.60 | 0.008 | 0.0006 | 0.03 | 0.051 | 0.014 | 0.0053 | 0.03 | 0.05 | 0.21 | 0.140 | 0.002 | 0.0026 | 752 | Conforming steel |
| A8 | 0.042 | 0.15 | 1.10 | 0.006 | 0.0006 | 0.03 | 0.052 | 0.010 | 0.0045 | 0.04 | 0.03 | 0.39 | 0.380 | 0.002 | 0.0025 | 770 | Conforming steel |
| A9 | 0.108 | 0.16 | 1.90 | 0.007 | 0.0004 | 0.04 | 0.050 | 0.016 | 0.0049 | 0.26 | 0.21 | 0.03 | 0.140 | 0.090 | 0.0025 | 696 | Comparative steel |
| A10 | 0.039 | 0.55 | 1.60 | 0.007 | 0.0004 | 0.03 | 0.091 | 0.035 | 0.0050 | 0.28 | 0.23 | 0.02 | 0.140 | 0.002 | 0.0015 | 740 | Comparative steel |
| A11 | 0.042 | 0.15 | 1.60 | 0.006 | 0.0006 | 0.03 | 0.003 | 0.014 | 0.0055 | 0.27 | 0.24 | 0.02 | 0.140 | 0.002 | 0.0027 | 739 | Comparative steel |
| A12 | 0.061 | 0.15 | 1.80 | 0.006 | 0.0006 | 0.03 | 0.078 | 0.014 | 0.0056 | - | - | - | - | - | - | 747 | Conforming steel |
| A13 | 0.055 | 0.40 | 1.78 | 0.006 | 0.0004 | 0.03 | 0.079 | 0.015 | 0.0058 | - | - | - | - | - | - | 751 | Conforming steel |

Table 6

| Cladding metal No. | Chemical composition of cladding metal (mass%) | | | | | | | | | | |
|---|---|---|---|---|---|---|---|---|---|---|---|
| | C | Si | Mn | P | S | Ni | Cr | Mo | Cu | Al | Ti |
| B1 | 0.010 | 0.23 | 0.41 | 0.019 | 0.0003 | 39.5 | 23.4 | 3.14 | 2.17 | 0.13 | 0.73 |
| B2 | 0.014 | 0.25 | 0.39 | 0.018 | 0.0004 | 41.5 | 22.1 | 3.41 | 1.89 | 0.18 | 1.11 |
| B3 | 0.018 | 0.26 | 0.41 | 0.018 | 0.0006 | 44.2 | 20.3 | 2.61 | 2.81 | 0.16 | 0.80 |
| B4 | 0.019 | 0.25 | 0.40 | 0.017 | 0.0007 | 41.1 | 21.5 | 3.20 | 1.55 | 0.17 | 0.77 |

Table 7

| Producing condition No. | Slab heating | Clad rolling | | | Accelerated cooling | | | Tempering |
| | Slab heating temperature (°C) | First rolling | Second rolling | | | | | Tempering temperature (°C) |
| | | Rolling reduction ratio at 950 °C or higher | Rolling reduction at 900 °C or lower (%) | Finish rolling temperature (°C) | Start cooling temperature (°C) | Cooling rate (°C) | Stop cooling temperature (°C) | |
| C1 | 1150 | 2.0 | 50 | 820 | 800 | 10 | 200 | 500 |
| C2 | 1050 | 2.0 | 60 | 820 | 800 | 11 | 200 | 500 |
| C3 | 1150 | 2.5 | 50 | 840 | 820 | 11 | 200 | 500 |
| C4 | 1150 | 2.0 | 50 | 820 | 800 | 10 | 450 | 500 |
| C5 | 1150 | 2.0 | 50 | 820 | 800 | 10 | 200 | 550 |
| C6 | 1150 | 2.0 | 50 | 820 | 800 | 10 | 200 | 400 |
| C7 | 1300 | 2.0 | 50 | 840 | 820 | 10 | 200 | 500 |
| C8 | 1000 | 2.0 | 50 | 840 | 700 | 10 | 200 | 500 |
| C9 | 1100 | 2.0 | 40 | 840 | 820 | 10 | 200 | 500 |
| C10 | 1100 | 2.0 | 50 | 840 | 820 | 1 | 200 | 500 |
| C11 | 1100 | 2.0 | 50 | 840 | 820 | 10 | 550 | 300 |
| C12 | 1100 | 2.0 | 50 | 840 | 820 | 10 | 200 | 650 |
| C13 | 1100 | 1.8 | 50 | 840 | 820 | 10 | 200 | 500 |
| C14 | 1100 | 2.0 | 50 | 780 | 760 | 10 | 200 | 500 |

Table 8

| No. | Base steel No. | Cladding metal No. | Producing condition No. | Steel microstructure of base steel plate | | | | | Evaluation result | | | | Remarks |
|---|---|---|---|---|---|---|---|---|---|---|---|---|---|
| | | | | Area ratio of bainite at 1/2 plate thickness position (%) | Area ratio of residual microstructure (%) | Residual microstructure* | Average grain diameter of bainite (μm) | Area ratio of martensite austenite constituent at 1/2 plate thickness position (%) | YS (MPa) | TS (MPa) | DWTT SA$_{-30\,°C}$ (%) | Shear strength at bonding or joining interface (MPa) | |
| 1 | A1 | B1 | C1 | 10 | 90 | M, F, θ | 25 | 1 | 430 | 500 | 98 | 330 | Comparative example |
| 2 | A2 | B1 | C1 | 96 | 4 | M, θ | 21 | 3 | 510 | 605 | 90 | 315 | Example |
| 3 | A3 | B1 | C1 | 96 | 4 | M, θ | 22 | 3 | 500 | 585 | 95 | 330 | Example |
| 4 | A4 | B1 | C1 | 97 | 3 | M, θ | 18 | 2 | 495 | 585 | 98 | 320 | Example |
| 5 | A5 | B1 | C1 | 96 | 4 | M, θ | 20 | 2 | 495 | 585 | 95 | 320 | Example |
| 6 | A6 | B1 | C1 | 96 | 4 | M, θ | 20 | 2 | 500 | 585 | 90 | 315 | Example |
| 7 | A7 | B1 | C1 | 96 | 4 | M, θ | 20 | 3 | 505 | 595 | 98 | 335 | Example |
| 8 | A8 | B1 | C1 | 96 | 4 | M, θ | 21 | 3 | 505 | 590 | 95 | 345 | Example |
| 9 | A9 | B1 | C1 | 92 | 8 | M, θ | 19 | 7 | 540 | 640 | 65 | 330 | Comparative example |
| 10 | A10 | B1 | C1 | 94 | 6 | M, θ | 18 | 5 | 510 | 600 | 45 | 320 | Comparative example |
| 11 | A11 | B1 | C1 | 97 | 3 | M, θ | 35 | 2 | 475 | 565 | 55 | 320 | Comparative example |
| 12 | A3 | B1 | C2 | 97 | 3 | M, θ | 19 | 2 | 500 | 590 | 100 | 300 | Example |
| 13 | A3 | B1 | C3 | 97 | 3 | M, θ | 24 | 2 | 500 | 585 | 88 | 360 | Example |
| 14 | A3 | B1 | C4 | 94 | 6 | M, θ | 22 | 5 | 490 | 595 | 85 | 320 | Example |

(continued)

| Area ratio of bainite at 1/2 plate thickness position (%) | Area ratio of residual microstructure (%) | Residual microstructure* | Average grain diameter of bainite (μm) | Area ratio of martensite austenite constituent at 1/2 plate thickness position (%) | YS (MPa) | TS (MPa) | DWTT SA‑30°C (%) | Shear strength at bonding or joining interface (MPa) | | | | | |
|---|---|---|---|---|---|---|---|---|---|---|---|---|---|
| 15 | A3 | B1 | C5 | 98 | 2 | M, θ | 22 | 1 | 500 | 580 | 90 | 320 | Example |
| 16 | A3 | B1 | C6 | 95 | 5 | M, θ | 22 | 4 | 490 | 590 | 98 | 320 | Example |
| 17 | A3 | B1 | C7 | 97 | 3 | M, θ | 35 | 2 | 500 | 585 | 45 | 355 | Comparative example |
| 18 | A3 | B1 | C8 | 98 | 2 | M, θ | 22 | 1 | 440 | 525 | 95 | 250 | Comparative example |
| 19 | A3 | B1 | C9 | 97 | 3 | M, θ | 28 | 2 | 595 | 580 | 65 | 330 | Comparative example |
| 20 | A3 | B1 | C10 | 10 | 90 | M, F, θ | 20 | 1 | 440 | 520 | 100 | 330 | Comparative example |
| 21 | A3 | B1 | C11 | 91 | 9 | M, θ | 22 | 7 | 490 | 600 | 80 | 330 | Comparative example |
| 22 | A3 | B1 | C12 | 93 | 7 | M, θ | 22 | 1 | 505 | 575 | 65 | 345 | Comparative example |
| 23 | A3 | B1 | C13 | 97 | 3 | M, θ | 25 | 2 | 495 | 585 | 85 | 305 | Example |
| 24 | A3 | B1 | C14 | 97 | 3 | M, θ | 20 | 2 | 505 | 590 | 98 | 310 | Example |
| 25 | A2 | B2 | C1 | 97 | 3 | M, θ | 22 | 2 | 500 | 585 | 95 | 320 | Example |
| 26 | A2 | B3 | C1 | 97 | 3 | M, θ | 22 | 2 | 500 | 585 | 95 | 320 | Example |
| 27 | A3 | B4 | C1 | 97 | 3 | M, θ | 22 | 2 | 500 | 585 | 95 | 315 | Example |
| 28 | A12 | B1 | C1 | 97 | 3 | M, θ | 22 | 2 | 495 | 585 | 95 | 320 | Example |
| 29 | A13 | B1 | C1 | 95 | 5 | M, θ | 22 | 4 | 495 | 590 | 85 | 310 | Example |

*M: martensite austenite constituent, F: ferrite phase, θ: cementite

It can be understood from Table 8 that each Example had a tensile strength of 535 MPa or more, a percent ductile fracture: DWTTSA$_{-30\,°C}$ of 85 % or more, and good bonding or joining property.

On the other hand, for the Comparative Example No. 1 in Table 8, where the C, Mn and Ti contents in the base steel plate were less than the appropriate range, a large amount of ferrite formed during the cooling, and precipitation strengthening by Ti was insufficient. As a result, the desired tensile strength could not be obtained.

For the Comparative Example No. 9, where the C and Mn contents in the base steel plate were more than the appropriate range, the amount of martensite austenite constituent increased, and the desired low-temperature toughness could not be obtained.

For the Comparative Example No. 10, where the Si, Nb and Ti contents in the base steel plate were more than the appropriate range, TiN was coarsened, and the coarsened TiN became the origin of brittle cracks. As a result, the desired low-temperature toughness could not be obtained.

For the Comparative Example No. 11, where the Nb content was less than the appropriate range, the expanding of the $\gamma$ non-recrystallization temperature range was insufficient and the austenite was coarsened, so that the product plate could not obtain fine bainite crystal grains. As a result, the desired low-temperature toughness could not be obtained.

For the Comparative Example No. 17, where the slab heating temperature was higher than the appropriate range, the austenite was coarsened, and the product plate could not obtain fine bainite crystal grains. As a result, the desired low-temperature toughness could not be obtained.

For the Comparative Example No. 18, where the slab heating temperature was lower than the appropriate range, the dissolving of strengthening elements was insufficient, and the desired tensile strength could not be obtained. In addition, the bonding or joining property between the base steel plate and the cladding metal was insufficient.

For the Comparative Example No. 19, where the cumulative rolling reduction when the surface temperature was in a temperature range of 900 °C or lower was less than the appropriate range, the refinement of bainite was insufficient, and the desired low-temperature toughness could not be obtained.

For the Comparative Example No. 20, where the average cooling rate was lower than the appropriate range, a large amount of ferrite formed during the cooling, and the desired tensile strength could not be obtained.

For the Comparative Example No. 21, where the stop cooling temperature was higher than the appropriate range and the tempering temperature was lower than the appropriate range, there was a large amount of martensite austenite constituent, and the desired low-temperature toughness could not be obtained.

For the Comparative Example No. 22, where the tempering temperature was higher than the appropriate range, the precipitates (cementite) were coarsened, and the desired low-temperature toughness could not be obtained.

(Example 3)

Clad steel plates were produced by stacking a base steel plate material having the chemical composition listed in Table 9 (with the balance being Fe and inevitable impurities) and a cladding metal material of an austenitic stainless steel having the chemical composition listed in Table 10 (with the balance being Fe and inevitable impurities) on top of one another in an order of (a) a base steel plate material/a cladding metal material, or (b) a base steel plate material/a cladding metal material/a cladding metal material/a base steel plate material, to prepare a slab; subjecting the slab to clad rolling (first rolling and second rolling) under the conditions listed in Table 11 to obtain a rolled plate; and then subjecting the obtained rolled plate to accelerated cooling and tempering under the conditions listed in Table 11 to obtain a clad steel plate with a thickness of 30 mm (where the thickness of the base steel plate was 27 mm and the thickness of the cladding metal was 3 mm).

Test pieces for tensile test and DWTT test were taken from each clad steel plate thus obtained, and tensile test and DWTT test (test temperature: -30 °C) were performed in accordance with API-5L to determine the tensile strength, yield strength, and percent ductile fracture: DWTTSA$_{-30\,°C}$ of each clad steel plate. The target values of tensile strength and percent ductile fracture: DWTTSA$_{-30\,°C}$ are as follows.

Tensile strength: 535 MPa or more

Percent ductile fracture: DWTTSA$_{-30\,°C}$: 85 % or more
(DWTTSA$_{-30\,°C}$ of 90 % or more would be excellent)

In addition, a shear test was performed in accordance with JISG0601 to determine the shear strength at the interface between the base steel plate and the cladding metal bonded or joined together, by which the bonding or joining property between the base steel plate and the cladding metal was evaluated. The bonding or joining property was evaluated as good if the shear strength at the bonding or joining interface was 300 MPa or more.

Furthermore, identification of steel microstructure, calculation of area ratio of each phase, and calculation of average grain diameter of bainite were performed with the above-described method.

The results are listed in Table 12.

Table 9

| Base steel No. | Chemical composition of base steel plate (mass%) | | | | | | | | | | | | | | | Ar₃ (°C) | Remarks |
|---|---|---|---|---|---|---|---|---|---|---|---|---|---|---|---|---|---|
| | c | Si | Mn | P | S | Al | Nb | Ti | N | Cu | Ni | Cr | Mo | V | Ca | | |
| A1 | 0.015 | 0.12 | 0.50 | 0.007 | 0.0006 | 0.03 | 0.052 | 0.002 | 0.0042 | 0.21 | 0.27 | 0.08 | 0.090 | 0.050 | 0.0025 | 838 | Comparative steel |
| A2 | 0.028 | 0.41 | 1.80 | 0.006 | 0.0005 | 0.05 | 0.071 | 0.014 | 0.0051 | 0.26 | 0.24 | 0.03 | 0.100 | 0.002 | 0.0035 | 730 | Conforming steel |
| A3 | 0.040 | 0.15 | 1.60 | 0.006 | 0.0006 | 0.03 | 0.051 | 0.014 | 0.0056 | 0.25 | 0.23 | 0.02 | 0.140 | 0.002 | 0.0026 | 740 | Conforming steel |
| A4 | 0.059 | 0.21 | 1.40 | 0.007 | 0.0006 | 0.04 | 0.062 | 0.015 | 0.0056 | 0.43 | 0.44 | 0.02 | 0.050 | 0.030 | 0.0025 | 743 | Conforming steel |
| A5 | 0.077 | 0.14 | 1.20 | 0.007 | 0.0005 | 0.04 | 0.038 | 0.016 | 0.0055 | 0.46 | 0.45 | 0.05 | 0.100 | 0.002 | 0.0027 | 747 | Conforming steel |
| A6 | 0.098 | 0.16 | 0.90 | 0.006 | 0.0005 | 0.03 | 0.024 | 0.020 | 0.0060 | 0.42 | 0.48 | 0.21 | 0.100 | 0.002 | 0.0028 | 762 | Conforming steel |
| A7 | 0.041 | 0.16 | 1.60 | 0.008 | 0.0006 | 0.03 | 0.051 | 0.014 | 0.0053 | 0.03 | 0.05 | 0.21 | 0.140 | 0.002 | 0.0026 | 752 | Conforming steel |
| A8 | 0.042 | 0.15 | 1.10 | 0.006 | 0.0006 | 0.03 | 0.052 | 0.010 | 0.0045 | 0.04 | 0.03 | 0.39 | 0.380 | 0.002 | 0.0025 | 770 | Conforming steel |
| A9 | 0.108 | 0.16 | 1.90 | 0.007 | 0.0004 | 0.04 | 0.050 | 0.016 | 0.0049 | 0.26 | 0.21 | 0.03 | 0.140 | 0.090 | 0.0025 | 696 | Comparative steel |
| A10 | 0.039 | 0.55 | 1.60 | 0.007 | 0.0004 | 0.03 | 0.091 | 0.035 | 0.0050 | 0.28 | 0.23 | 0.02 | 0.140 | 0.002 | 0.0015 | 740 | Comparative steel |
| A11 | 0.042 | 0.15 | 1.60 | 0.006 | 0.0006 | 0.03 | 0.003 | 0.014 | 0.0055 | 0.27 | 0.24 | 0.02 | 0.140 | 0.002 | 0.0027 | 739 | Comparative steel |
| A12 | 0.061 | 0.15 | 1.80 | 0.006 | 0.0006 | 0.03 | 0.078 | 0.014 | 0.0056 | - | - | - | - | - | - | 747 | Conforming steel |
| A13 | 0.055 | 0.40 | 1.78 | 0.006 | 0.0004 | 0.03 | 0.079 | 0.015 | 0.0058 | - | - | - | - | - | - | 751 | Conforming steel |

Table 10

| Cladding metal No. | Chemical composition of cladding metal (mass%) | | | | | | | |
|---|---|---|---|---|---|---|---|---|
| | C | Si | Mn | P | s | Ni | Cr | Mo |
| B1 | 0.015 | 0.61 | 0.76 | 0.021 | 0.0006 | 12.21 | 17.68 | 2.15 |
| B2 | 0.019 | 0.51 | 0.55 | 0.021 | 0.0007 | 13.45 | 17.85 | 2.89 |
| B3 | 0.015 | 0.56 | 0.64 | 0.018 | 0.0005 | 14.41 | 16.31 | 2.55 |
| B4 | 0.029 | 0.63 | 0.81 | 0.021 | 0.0007 | 12.35 | 17.31 | 2.08 |

Table 11

| Producing condition No. | Slab heating | Clad rolling | | | Accelerated cooling | | | Tempering |
| | | First rolling | Second rolling | | | | | |
| | Slab heating temperature (°C) | Rolling reduction ratio at 950 °C or higher | Rolling reduction at 900 °C or lower (%) | Finish rolling temperature (°C) | Start cooling temperature (°C) | Cooling rate (°C) | Stop cooling temperature (°C) | Tempering temperature (°C) |
|---|---|---|---|---|---|---|---|---|
| C1 | 1150 | 2.0 | 50 | 820 | 800 | 10 | 200 | 500 |
| C2 | 1050 | 2.0 | 60 | 820 | 800 | 11 | 200 | 500 |
| C3 | 1150 | 2.5 | 50 | 840 | 820 | 11 | 200 | 500 |
| C4 | 1150 | 2.0 | 50 | 820 | 800 | 10 | 450 | 500 |
| C5 | 1150 | 2.0 | 50 | 820 | 800 | 10 | 200 | 550 |
| C6 | 1150 | 2.0 | 50 | 820 | 800 | 10 | 200 | 400 |
| C7 | 1300 | 2.0 | 50 | 840 | 820 | 10 | 200 | 500 |
| C8 | 1000 | 2.0 | 50 | 840 | 700 | 10 | 200 | 500 |
| C9 | 1100 | 2.0 | 40 | 840 | 820 | 10 | 200 | 500 |
| C10 | 1100 | 2.0 | 50 | 840 | 820 | 1 | 200 | 500 |
| C11 | 1100 | 2.0 | 50 | 840 | 820 | 10 | 550 | 300 |
| C12 | 1100 | 2.0 | 50 | 840 | 820 | 10 | 200 | 650 |
| C13 | 1100 | 1.8 | 50 | 840 | 820 | 10 | 200 | 500 |
| C14 | 1100 | 2.0 | 50 | 780 | 760 | 10 | 200 | 500 |

Table 12

| No. | Base steel No. | Cladding metal No. | Producing condition No. | Steel microstructure of base steel plate | | | | | Evaluation result | | | | Remarks |
|---|---|---|---|---|---|---|---|---|---|---|---|---|---|
| | | | | Area ratio of bainite at 1/2 plate thickness position (%) | Area ratio of residual microstructure (%) | Residual microstructure* | Average grain diameter of bainite (μm) | Area ratio of martensite austenite constituent at 1/2 plate thickness position (%) | YS (MPa) | TS (MPa) | DWTT SA$_{-30\ °C}$ (%) | Shear strength at bonding or joining interface (MPa) | |
| 1 | A1 | B1 | C1 | 10 | 90 | M, F, θ | 25 | 1 | 430 | 500 | 98 | 370 | Comparative example |
| 2 | A2 | B1 | C1 | 96 | 4 | M, θ | 21 | 3 | 510 | 605 | 90 | 350 | Example |
| 3 | A3 | B1 | C1 | 96 | 4 | M, θ | 22 | 3 | 500 | 585 | 95 | 345 | Example |
| 4 | A4 | B1 | C1 | 97 | 3 | M, θ | 18 | 2 | 495 | 585 | 98 | 345 | Example |
| 5 | A5 | B1 | C1 | 96 | 4 | M, θ | 20 | 2 | 495 | 585 | 95 | 350 | Example |
| 6 | A6 | B1 | C1 | 96 | 4 | M, θ | 20 | 2 | 500 | 585 | 90 | 345 | Example |
| 7 | A7 | B1 | C1 | 96 | 4 | M, θ | 20 | 3 | 505 | 595 | 98 | 355 | Example |
| 8 | A8 | B1 | C1 | 96 | 4 | M, θ | 21 | 3 | 505 | 590 | 95 | 350 | Example |
| 9 | A9 | B1 | C1 | 92 | 8 | M, θ | 19 | 7 | 540 | 640 | 65 | 344 | Comparative example |
| 10 | A10 | B1 | C1 | 94 | 6 | M, θ | 18 | 5 | 510 | 600 | 45 | 345 | Comparative example |
| 11 | A11 | B1 | C1 | 97 | 3 | M, θ | 35 | 2 | 475 | 565 | 55 | 345 | Comparative example |
| 12 | A3 | B1 | C2 | 97 | 3 | M, θ | 19 | 2 | 500 | 590 | 100 | 330 | Example |
| 13 | A3 | B1 | C3 | 97 | 3 | M, θ | 24 | 2 | 500 | 585 | 88 | 400 | Example |
| 14 | A3 | B1 | C4 | 94 | 6 | M, θ | 22 | 5 | 490 | 595 | 85 | 345 | Example |

EP 3 604 597 B1

(continued)

| | | | | Area ratio of bainite at 1/2 plate thickness position (%) | Area ratio of residual microstructure (%) | Residual microstructure* | Average grain diameter of bainite (μm) | Area ratio of martensite austenite constituent at 1/2 plate thickness position (%) | YS (MPa) | TS (MPa) | DWTT SA$_{-30\,°C}$ (%) | Shear strength at bonding or joining interface (MPa) | |
|---|---|---|---|---|---|---|---|---|---|---|---|---|---|
| 15 | A3 | B1 | C5 | 98 | 2 | M, θ | 22 | 1 | 500 | 580 | 90 | 350 | Example |
| 16 | A3 | B1 | C6 | 95 | 5 | M, θ | 22 | 4 | 490 | 590 | 98 | 365 | Example |
| 17 | A3 | B1 | C7 | 97 | 3 | M, θ | 35 | 2 | 500 | 585 | 45 | 390 | Comparative example |
| 18 | A3 | B1 | C8 | 98 | 2 | M, θ | 22 | 1 | 440 | 525 | 95 | 280 | Comparative example |
| 19 | A3 | B1 | C9 | 97 | 3 | M, θ | 28 | 2 | 595 | 580 | 65 | 360 | Comparative example |
| 20 | A3 | B1 | C10 | 10 | 90 | M, F, θ | 20 | 1 | 440 | 520 | 100 | 370 | Comparative example |
| 21 | A3 | B1 | C11 | 91 | 9 | M, θ | 22 | 7 | 490 | 600 | 80 | 365 | Comparative example |
| 22 | A3 | B1 | C12 | 93 | 7 | M, θ | 22 | 1 | 505 | 575 | 65 | 360 | Comparative example |
| 23 | A3 | B1 | C13 | 97 | 3 | M, θ | 25 | 2 | 495 | 585 | 85 | 330 | Example |
| 24 | A3 | B1 | C14 | 97 | 3 | M, θ | 20 | 2 | 505 | 590 | 98 | 345 | Example |
| 25 | A2 | B2 | C1 | 97 | 3 | M, θ | 22 | 2 | 500 | 585 | 95 | 350 | Example |
| 26 | A2 | B3 | C1 | 97 | 3 | M, θ | 22 | 2 | 500 | 585 | 95 | 345 | Example |
| 27 | A3 | B4 | C1 | 97 | 3 | M, θ | 22 | 2 | 500 | 585 | 95 | 355 | Example |
| 28 | A12 | B1 | C1 | 97 | 3 | M, θ | 22 | 2 | 495 | 585 | 95 | 370 | Example |
| 29 | A13 | B1 | C1 | 95 | 5 | M, θ | 22 | 4 | 495 | 590 | 85 | 310 | Example |

*M: martensite austenite constituent, F: ferrite phase, θ: cementite

It can be understood from Table 12 that each Example had a tensile strength of 535 MPa or more, a percent ductile fracture: DWTTSA$_{-30\ °C}$ of 85 % or more, and good bonding or joining property.

On the other hand, for the Comparative Example No. 1 in Table 12, where the C, Mn and Ti contents in the base steel plate were less than the appropriate range, a large amount of ferrite formed during the cooling, and precipitation strengthening by Ti was insufficient. As a result, the desired tensile strength could not be obtained.

For the Comparative Example No. 9, where the C and Mn contents in the base steel plate were more than the appropriate range, the amount of martensite austenite constituent increased, and the desired low-temperature toughness could not be obtained.

For the Comparative Example No. 10, where the Si, Nb and Ti contents in the base steel plate were more than the appropriate range, problems such as coarsening of TiN occurred, and the coarsened TiN became the origin of ductile cracks and brittle cracks. As a result, the desired low-temperature toughness could not be obtained.

For the Comparative Example No. 11, where the Nb content was less than the appropriate range, the expanding of the γ non-recrystallization temperature range was insufficient and the austenite was coarsened, so that the product plate could not obtain fine bainite crystal grains. As a result, the desired low-temperature toughness could not be obtained.

For the Comparative Example No. 17, where the slab heating temperature was higher than the appropriate range, the austenite was coarsened, and the product plate could not obtain fine bainite crystal grains. As a result, the desired low-temperature toughness could not be obtained.

For the Comparative Example No. 18, where the slab heating temperature was lower than the appropriate range, the dissolving of strengthening elements was insufficient, and the desired tensile strength could not be obtained. In addition, the bonding or joining property between the base steel plate and the cladding metal was insufficient.

For the Comparative Example No. 19, where the cumulative rolling reduction when the surface temperature was in a temperature range of 900 °C or lower was less than the appropriate range, the refinement of bainite was insufficient, and the desired low-temperature toughness could not be obtained.

For the Comparative Example No. 20, where the average cooling rate was lower than the appropriate range, a large amount of ferrite formed during the cooling, and the desired tensile strength could not be obtained.

For the Comparative Example No. 21, where the stop cooling temperature was higher than the appropriate range and the tempering temperature was lower than the appropriate range, there was a large amount of martensite austenite constituent, and the desired low-temperature toughness could not be obtained.

For the Comparative Example No. 22, where the tempering temperature was higher than the appropriate range, the precipitates (cementite) were coarsened, and the desired low-temperature toughness could not be obtained.

**Claims**

1.    A clad steel plate comprising: a base steel plate; and a cladding metal made of a corrosion-resistant alloy bonded or joined to one surface of the base steel plate, wherein

the base steel plate has a chemical composition containing, in mass%,

C: 0.020 % to 0.100 %,
Si: 0.05 % to 0.50 %,
Mn: 0.75 % to 1.80 %,
P: 0.015 % or less,
S: 0.0030 % or less,
Al: 0.010 % to 0.070 %,
Nb: 0.005 % to 0.080 %,
Ti: 0.005 % to 0.030 %, and
N: 0.0010 % to 0.0060 %,
optionally at least one selected from
Cu: 0.50 % or less,
Cr: 0.50 % or less,
Mo: 0.50 % or less,
V: 0. 100 % or less,
Ni: 0.50 % or less, or
Ca: 0.0040 % or less
with the balance being Fe and inevitable impurities;

the base steel plate has a steel microstructure where an average grain diameter of the bainite is 25 μm or less; and

an interface between the base steel plate and the cladding metal bonded or joined together has a shear strength of 300 MPa or more, wherein the average grain diameter of the bainite is measured in accordance with the specifics given in the description and the shear strength is measured in accordance with JISG0601, wherein the corrosion-resistant alloy is a Ni-based alloy of Alloy 625 or of Alloy 825 or an austenitic stainless steel, **characterized in that** the base steel plate has a steel microstructure where, at a 1/2 plate thickness position in a thickness direction of the base steel plate, an area ratio of bainite is 94 % or more, and an area ratio of martensite austenite constituent is 6 % or less.

2. A method of producing a clad steel plate, comprising:

stacking a base steel plate material having the chemical composition of the base steel plate according to claim 1 and a cladding metal material made of a Ni-based alloy of Alloy 625 to prepare a slab, and heating the slab to a surface temperature in a temperature range of 1050 °C to 1200 °C;

subsequently, subjecting the slab to first rolling where a rolling reduction ratio is 2.0 or more when a surface temperature is in a temperature range of 950 °C or higher, and then to second rolling where a cumulative rolling reduction is 50 % or more when a surface temperature is in a temperature range of 900 °C or lower and a finish rolling temperature is a surface temperature of 800 °C or higher, to obtain a rolled plate comprising a base steel plate and a cladding metal;

subsequently, subjecting the rolled plate to accelerated cooling where a start cooling temperature is a surface temperature of $Ar_3$ or higher, an average cooling rate is 5 °C/s or more, and a stop cooling temperature is a temperature of 500 °C or lower at a 1/2 plate thickness position in a thickness direction of the base steel plate; wherein

the average cooling rate during the accelerated cooling is calculated by dividing a difference between start cooling temperature and stop cooling temperature at the 1/2 plate thickness position in the thickness direction of the base steel plate by cooling time; and

**characterized by**

further subjecting the rolled plate to heating to a tempering temperature and tempering where the tempering temperature at the 1/2 plate thickness position in the thickness direction of the base steel plate is in a temperature range of 350 °C to 600 °C.

3. A method of producing a clad steel plate, comprising:

stacking a base steel plate material having the chemical composition of the base steel plate according to claim 1, and a cladding metal material made of an austenitic stainless steel or a cladding metal material made of a Ni-based alloy of Alloy 825, to prepare a slab, and heating the slab to a surface temperature in a temperature range of 1050 °C to 1200 °C;

subsequently, subjecting the slab to first rolling where a rolling reduction ratio is 1.5 or more when a surface temperature is in a temperature range of 950 °C or higher, and then to second rolling where a cumulative rolling reduction is 50 % or more when a surface temperature is in a temperature range of 900 °C or lower and a finish rolling temperature is a surface temperature of 750 °C or higher, to obtain a rolled plate comprising a base steel plate and a cladding metal;

subsequently, subjecting the rolled plate to accelerated cooling where a start cooling temperature is a surface temperature of $Ar_3$ or higher, an average cooling rate is 5 °C/s or more, and a stop cooling temperature is a temperature of 500 °C or lower at a 1/2 plate thickness position in a thickness direction of the base steel plate; wherein

the average cooling rate during the accelerated cooling is calculated by dividing a difference between start cooling temperature and stop cooling temperature at the 1/2 plate thickness position in the thickness direction of the base steel plate by cooling time; and

**characterized by**

further subjecting the rolled plate to heating to a tempering temperature and tempering where the tempering temperature at the 1/2 plate thickness position in the thickness direction of the base steel plate is in a temperature range of 350 °C to 600 °C.

4. The method of producing a clad steel plate according to claim 2 or 3, wherein the slab is obtained by stacking a base steel plate material, a cladding metal material, a cladding metal material, and a base steel plate material in the stated order.

**Patentansprüche**

1. Plattierte Stahltafel, die Folgendes umfasst: eine Basisstahltafel; und ein Plattierungsmetall, das aus einer korrosionsbeständigen Legierung hergestellt ist, die an eine Oberfläche der Basisstahltafel geklebt oder gefügt ist, wobei

   die Basisstahltafel eine chemische Zusammensetzung aufweist, die in Gew.-% beinhaltet,
   C: 0,020 % bis 0,100 %,
   Si: 0,05 % bis 0,50 %,
   Mn: 0,75 % bis 1,80 %,
   P: 0,015 % oder weniger,
   S: 0,0030 % oder weniger,
   Al: 0,010 % bis 0,070 %,
   Nb: 0,005 % bis 0,080 %,
   Ti: 0,005 % bis 0,030 %, und
   N: 0,0010 % bis 0,0060 %,
   optional mindestens eines ausgewählt aus
   Cu: 0,50 % oder weniger,
   Cr: 0,5 0 % oder weniger,
   Mo: 0,50 % oder weniger,
   V: 0, 100 % oder weniger,
   Ni: 0,50 % oder weniger, oder
   Ca: 0,0040 % oder weniger
   wobei der Rest aus Fe und unvermeidlichen Verunreinigungen besteht;
   die Basisstahltafel eine Stahlmikrostruktur aufweist, wobei ein mittlerer Korndurchmesser des Bainits 25 μm oder weniger beträgt; und
   eine Schnittfläche zwischen der Basisstahltafel und dem Plattierungsmetall, die zusammengeklebt oder -gefügt sind, eine Scherkraft von 300 MPa oder mehr aufweist, wobei der mittlere Korndurchmesser des Bainits gemäß den Spezifika, die in der Beschreibung gegeben sind, gemessen wird, und die Scherkraft gemäß JISG0601 gemessen wird,
   wobei die korrosionsbeständige Legierung eine auf Ni basierende Legierung aus Legierung 625 oder aus Legierung 825 oder ein austenitischer korrosionsbeständiger Stahl ist,
   **dadurch gekennzeichnet, dass**
   die Basisstahltafel eine Stahlmikrostruktur aufweist, wobei an einer 1/2 Tafeldickenposition in einer Dickenrichtung der Basisstahltafel ein Flächenverhältnis von Bainit von 94 % oder mehr beträgt, und ein Flächenverhältnis von Martensit- Austenit-Bestandteil 6 % oder weniger beträgt.

2. Verfahren zum Erzeugen einer plattierten Stahltafel, umfassend:

   Stapeln eines Basisstahltafelmaterials, das eine chemische Zusammensetzung der Basisstahltafel nach Anspruch 1 aufweist, und eines Plattierungsmetallmaterials, das aus einer auf Ni basierenden Legierung aus Legierung 625 hergestellt ist, um eine Platte vorzubereiten, und Erhitzen der Platte auf eine Oberflächentemperatur in einem Temperaturbereich von 1050 °C bis 1200 °C;
   anschließend Unterwerfen der Platte einem ersten Walzen, wobei ein Walzreduktionsverhältnis 2,0 oder mehr beträgt, wenn eine Oberflächentemperatur in einem Temperaturbereich von 950 °C oder höher ist, und dann einem zweiten Walzen, wobei eine kumulative Walzreduktion 50 % oder mehr beträgt, wenn eine Oberflächentemperatur in einem Temperaturbereich von 900 °C oder niedriger ist,und eine Fertigwalztemperatur eine Oberflächentemperatur von 800 °C oder höher ist, um eine Walztafel zu erhalten, die eine Basisstahltafel und ein Plattierungsmetall umfasst;
   anschließend Unterwerfen der Walztafel einem beschleunigten Kühlen, wobei eine Startkühltemperatur eine Oberflächentemperatur von Ar$_3$ oder höher ist, eine mittlere Kühlrate 5 °C/s oder mehr beträgt, und eine Abschlusskühltemperatur eine Temperatur von 500 °C oder niedriger bei einer 1/2 Tafeldickenposition in einer Dickenrichtung der Basisstahltafel beträgt; wobei
   die mittlere Kühlrate während des beschleunigten Kühlens durch Dividieren eines Unterschieds zwischen Startkühltemperatur und Abschlusskühltemperatur bei der 1/2 Tafeldickenposition in der Dickenrichtung der Basisstahltafel durch die Kühlzeit berechnet wird; und
   **gekennzeichnet durch**
   weiter Unterwerfen der Walztafel einem Erhitzen auf eine Anlasstemperatur und Anlassen, wobei die Anlasstemperatur bei der 1/2 Tafeldickenposition in der Dickenrichtung der Basisstahltafel in einem Temperaturbereich von 350 °C bis 600 °C liegt.

3.  Verfahren zum Erzeugen einer plattierten Stahltafel, umfassend:

Stapeln eines Basisstahltafelmaterials, das eine chemische Zusammensetzung der Basisstahltafel nach Anspruch 1 aufweist, und eines Plattierungsmetallmaterials, das aus einem austenitischen korrosionsbeständigen Stahl hergestellt ist, oder eines Plattierungsmetallmaterials, das aus einer auf Ni basierenden Legierung aus Legierung 825 hergestellt ist, um eine Platte vorzubereiten, und Erhitzen der Platte auf eine Oberflächentemperatur in einem Temperaturbereich von 1050 °C bis 1200 °C;

anschließend Unterwerfen der Platte einem ersten Walzen, wobei ein Walzreduktionsverhältnis 1,5 oder mehr beträgt, wenn eine Oberflächentemperatur in einem Temperaturbereich von 950 °C oder höher liegt, und dann einem zweiten Walzen, wobei eine kumulative Walzreduktion 50 % oder mehr beträgt, wenn eine Oberflächentemperatur in einem Temperaturbereich von 900 °C oder niedriger liegt und eine Fertigwalztemperatur eine Oberflächentemperatur von 750 °C oder höher ist, um eine Walztafel zu erhalten, die eine Basisstahltafel und ein Plattierungsmetall umfasst;

anschließend Unterwerfen der Walztafel einem beschleunigten Kühlen, wobei eine Startkühltemperatur eine Oberflächentemperatur von $Ar_3$ oder höher ist, eine mittlere Kühlrate 5 °C/s oder mehr beträgt, und eine Abschlusskühltemperatur eine Temperatur von 500 °C oder niedriger bei einer 1/2 Tafeldickenposition in einer Dickenrichtung der Basisstahltafel beträgt; wobei

die mittlere Kühlrate während des beschleunigten Kühlens durch Dividieren eines Unterschieds zwischen Startkühltemperatur und Abschlusskühltemperatur bei der 1/2 Tafeldickenposition in der Dickenrichtung der Basisstahltafel durch die Kühlzeit berechnet wird; und

**gekennzeichnet durch**

weiter Unterwerfen der Walztafel einem Erhitzen auf eine Anlasstemperatur und Anlassen, wobei die Anlasstemperatur bei der 1/2 Tafeldickenposition in der Dickenrichtung der Basisstahltafel in einem Temperaturbereich von 350 °C bis 600 °C liegt.

4.  Verfahren zum Herstellen einer plattierten Stahltafel nach Anspruch 2 oder 3, wobei die Platte durch Stapeln eines Basisstahltafelmaterials, eines Plattierungsmetallmaterials, eines Plattierungsmetallmaterials und eines Basisstahltafelmaterials in der erwähnten Reihenfolge erhalten wird.


**Revendications**

1.  Tôle d'acier plaquée comprenant : une tôle d'acier de base ; et un métal de placage constitué d'un alliage résistant à la corrosion lié ou joint à une surface de la tôle d'acier de base, dans laquelle

la tôle d'acier de base présente une composition chimique contenant, en % en masse,
C : de 0,020 % à 0,100 %,
Si : de 0,05 % à 0,50 %,
Mn : de 0,75 % à 1,80 %,
P : 0,015 % ou moins,
S : 0,0030 ou moins %,
Al : de 0,010 % à 0,070 %,
Nb : de 0,005 % à 0,080 %,
Ti : de 0,005 % à 0,030 %, et
N : de 0,0010 % à 0,0060 %,
facultativement au moins un choisi parmi
Cu : 0,50 % ou moins,
Cr : 0,50 % ou moins,
Mo : 0,50 % ou moins,
V : 0,100 % ou moins,
Ni : 0,50 % ou moins, ou
Ca : 0,0040 % ou moins
le reste étant du Fe et des impuretés inévitables ;
la tôle d'acier de base présente une microstructure d'acier où un diamètre moyen de grain de la bainite est de 25 $\mu$m ou moins ; et
une interface entre la tôle d'acier de base et le métal de placage lié ou joint présente une résistance au cisaillement de 300 MPa ou plus, dans laquelle le diamètre de grain moyen de la bainite est mesuré conformément aux spécificités données dans la description et la résistance au cisaillement est mesurée conformément à JISG0601, dans laquelle l'alliage résistant à la corrosion est un alliage à base de Ni d'Alliage 625 ou d'Alliage 825 ou un acier inoxydable austénitique,

**caractérisée en ce que**
la tôle d'acier de base présente une microstructure d'acier où, à une position de 1/2 d'épaisseur de tôle dans une direction d'épaisseur de la tôle d'acier de base, un rapport surfacique de bainite est de 94 % ou plus, et un rapport surfacique de constituant martensite-austénite est de 6 % ou moins.

2. Procédé de production d'une tôle d'acier plaquée, comprenant les étapes consistant à :

empiler un matériau de tôle d'acier de base présentant la composition chimique de la tôle d'acier de base selon la revendication 1 et un matériau métallique de placage constitué d'un alliage à base de Ni d'alliage 625 pour préparer une brame, et chauffer la brame à une température de surface dans une plage de température de 1050 °C à 1 200 °C ;
ensuite, soumettre la brame à un premier laminage où un taux de réduction de laminage est de 2,0 ou plus lorsqu'une température de surface est dans une plage de température de 950 °C ou plus, puis à un second laminage où une réduction de laminage cumulée est de 50 % ou plus lorsqu'une température de surface est dans une plage de température de 900 °C ou moins et une température de laminage de finition est une température de surface de 800 °C ou plus, pour obtenir une tôle laminée comprenant une tôle d'acier de base et un métal de placage ;
ensuite, soumettre la tôle laminée à un refroidissement accéléré où une température de début de refroidissement est une température de surface de Ar$_3$ ou plus, une vitesse de refroidissement moyenne est de 5 °C/s ou plus, et une température d'arrêt de refroidissement est une température de 500 °C ou moins à une position de 1/2 d'épaisseur de tôle dans une direction d'épaisseur de la tôle d'acier de base ; dans lequel
la vitesse de refroidissement moyenne pendant le refroidissement accéléré est calculée en divisant une différence entre une température de début de refroidissement et une température d'arrêt de refroidissement à la position de 1/2 d'épaisseur de tôle dans la direction d'épaisseur de la tôle d'acier de base par le temps de refroidissement ; et
**caractérisé par** l'étape consistant à
soumettre en outre la tôle laminée à un chauffage à une température de revenu et à un revenu où la température de revenu à la position de 1/2 d'épaisseur de tôle dans la direction d'épaisseur de la tôle d'acier de base est dans une plage de température de 350 °C à 600 °C.

3. Procédé de production d'une tôle d'acier plaquée, comprenant les étapes consistant à :

empiler un matériau de tôle d'acier de base présentant la composition chimique de la tôle d'acier de base selon la revendication 1, et un matériau métallique de placage constitué d'un acier inoxydable austénitique ou un matériau métallique de placage constitué d'un alliage à base de Ni d'alliage 825, pour préparer une brame, et chauffer la brame à une température de surface dans une plage de température de 1050 °C à 1 200 °C ;
ensuite, soumettre la brame à un premier laminage où un taux de réduction de laminage est de 1,5 ou plus lorsqu'une température de surface est dans une plage de température de 950 °C ou plus, puis à un second laminage où une réduction de laminage cumulée est de 50 % ou plus lorsqu'une la température de surface est dans une plage de température de 900 °C ou moins et une température de laminage de finition est une température de surface de 750 °C ou plus, pour obtenir une tôle laminée comprenant une tôle d'acier de base et un métal de placage ;
ensuite, soumettre la tôle laminée à un refroidissement accéléré où une température de début de refroidissement est une température de surface de Ar$_3$ ou plus, une vitesse de refroidissement moyenne est de 5 °C/s ou plus, et une température d'arrêt de refroidissement est une température de 500 °C ou moins à une position de 1/2 d'épaisseur de tôle dans une direction d'épaisseur de la tôle d'acier de base ; dans lequel
la vitesse de refroidissement moyenne pendant le refroidissement accéléré est calculée en divisant une différence entre une température de début de refroidissement et une température d'arrêt de refroidissement à la position de 1/2 d'épaisseur de tôle dans la direction d'épaisseur de la tôle d'acier de base par le temps de refroidissement ; et
**caractérisé par** l'étape consistant à
soumettre en outre la tôle laminée à un chauffage à une température de revenu et à un revenu où la température de revenu à la position de 1/2 d'épaisseur de tôle dans la direction d'épaisseur de la tôle d'acier de base est dans une plage de température de 350 °C à 600 °C.

4. Procédé de production d'une tôle d'acier plaquée selon la revendication 2 ou 3, dans lequel la brame est obtenue en empilant un matériau de tôle d'acier de base, un matériau métallique de plaquage, un matériau métallique de plaquage et un matériau de tôle d'acier de base dans l'ordre indiqué.

**REFERENCES CITED IN THE DESCRIPTION**

**Patent documents cited in the description**

- JP 2015086422 A
- JP 2015117408 A
- JP 2015105399 A
- WO 2016075925 A1